# EUROPEAN PATENT APPLICATION

(11) **EP 4 801 096 A1**
(43) Date of publication of application: **02.09.2026**
(21) Application number: 24893280.8
(22) Date of filing: 11.11.2024
(51) Int. Cl.: H04W 24/04

(54) **METHOD FOR SENSING MEASUREMENT AND COMMUNICATION APPARATUS**

(30) Priority: 22.11.2023 CN 202311567067
(71) Applicant: Huawei Technologies Co., Ltd., Shenzhen, Guangdong 518129 (CN)
(72) Inventor: TANG, Zhuqing, Shenzhen, Guangdong 518129 (CN); HUANG, Lei, Shenzhen, Guangdong 518129 (CN); DU, Rui, Shenzhen, Guangdong 518129 (CN); HAN, Xiao, Shenzhen, Guangdong 518129 (CN)
(74) Representative: Thun, Clemens
(86) International application number: PCT/CN2024/131299
(87) International publication number: WO 2025/108122

(57) **Abstract**

This application provides a method for sensing measurement and a communication apparatus, which are mainly applied to a scenario in which an MLD performs multi-link sensing in a WLAN. For a scenario in which a sensing initiator and a sensing responder need to remove a link, solutions for a sensing measurement setup procedure and a sensing measurement exchange procedure are provided. Based on a type of a to-be-removed link, the sensing initiator or the sensing responder may remove the link and terminate a sensing measurement session, or reconfigure a new link so that the sensing measurement session continues. Alternatively, when the to-be-removed link is a redundant link, the sensing initiator or the sensing responder removes the redundant link, and work of the sensing measurement session on another link is not affected. Therefore, a corresponding operation is performed based on the type of the to-be-removed link, avoiding unnecessary air interface occupation and a waste of resources that may be caused on another link. Compared with re-establishing a sensing measurement session, reconfiguring a new link can reduce a waste of resources and signaling overheads.

## Description

This application claims priority to Chinese Patent Application No. 202311567067.9, filed with the China National Intellectual Property Administration on November 22, 2023 and entitled "METHOD FOR SENSING MEASUREMENT AND COMMUNICATION APPARATUS", which is incorporated herein by reference in its entirety.

### TECHNICAL FIELD

This application relates to the field of wireless communication technologies, and more specifically, to a method for sensing measurement and a communication apparatus.

### BACKGROUND

In the Institute of Electrical and Electronics Engineers (Institute of Electrical and Electronics Engineers, IEEE) 802.11bf standard, sensing measurement is presented in a form of session. Currently, sensing in 802.11bf mainly focuses on single-link scenarios. 802.11be, also referred to as seventh generation wireless fidelity (wireless fidelity, Wi-Fi 7), has introduced a multi-link feature. With popularization of Wi-Fi 7, there will be more multi-link devices. In a multi-link scenario, when an access point (access point, AP) multi-link device (multi-link device, MLD) and a non-AP MLD perform multi-link sensing, there may be a scenario in which the AP MLD or the non-AP MLD needs to remove or close a link. In different sensing scenarios, functions of links used for sensing may be different. Therefore, removing or closing different links brings different impact on sensing measurement/sensing results. For example, if a to-be-removed link is a link that is essential for sensing measurement, removing the link will lead to invalidity of a sensing report on another link, and will further cause unnecessary air interface occupation due to continued sensing exchanges on the another link, leading to a waste of resources.

Therefore, a solution for removing or closing a link in the multi-link scenario is urgently required.

### SUMMARY

This application provides a method for sensing measurement and a communication apparatus, to provide proper solutions for different scenarios of link removal.

According to a first aspect, a method for sensing measurement is provided. The method may be performed by a communication apparatus or a module (for example, a chip or a circuit) used in a communication apparatus. This is not limited herein. For ease of description, the following uses the communication apparatus as an example for description. The communication apparatus may be, for example, a sensing initiator or a sensing responder in a multi-link sensing scenario. The method may include: determining a link type of a first link, where the first link is a to-be-removed link in a plurality of links of a sensing measurement session, and the link type includes a mandatory link, an optional link, or a redundant link; and removing the first link based on the link type of the first link.

In this technical solution, when a link needs to be removed, a sensing initiating apparatus or a sensing responding apparatus removes the link based on a link type of the to-be-removed link (where the link type is a type of the to-be-removed link relative to sensing measurement, for example, the to-be-removed link may be a mandatory link, an optional link, or a redundant link for sensing measurement), to provide proper solutions for different scenarios of link removal.

With reference to the first aspect, in some implementations of the first aspect, removing the first link based on the link type of the first link includes: if the first link is a mandatory link or an optional link, removing the first link after a timer expires. The method further includes: terminating the sensing measurement session.

In this implementation, based on the link type of the to-be-removed first link, another operation or other processing may be performed after the first link is removed, to avoid adverse impact existing after the first link is removed. For example, if the first link is a mandatory link, the sensing measurement session is terminated after the first link is removed, so that an invalid sensing measurement report generated because the sensing measurement session continues on another link and a waste of air interface resources due to reporting of the sensing measurement report can be avoided.

With reference to the first aspect, in some implementations of the first aspect, removing the first link based on the link type of the first link includes: if the first link is an optional link, removing the first link after a timer expires. The method further includes: performing link reconfiguration before the timer expires.

In this implementation, based on the link type of the to-be-removed first link, another operation or other processing may be performed after the first link is removed, to provide a proper solution for removing a link in a multi-link scenario. For example, if the first link is an optional link, it may be selected not to terminate the sensing measurement session after the first link is removed, but to reconfigure a new link before the timer expires, so as to continue to perform sensing measurement on the new link after configuration of the new link is completed. In addition, sensing measurement on another link is not affected by removal of the first link. It can be seen that a purpose of continuing to perform sensing measurement can be achieved, and overheads caused by re-establishing a new sensing measurement session after the sensing measurement session is terminated can be further avoided.

With reference to the first aspect, in some implementations of the first aspect, removing the first link based on the link type of the first link includes: if the first link is a redundant link, removing the first link after a timer expires.

In this implementation, if the to-be-removed first link is a redundant link, the first link may be removed after the timer expires. Because the redundant link is a backup link for sensing measurement, removal of the redundant link does not affect execution of sensing measurement on another link.

With reference to the first aspect, in some implementations of the first aspect, performing link reconfiguration before the timer expires includes: sending a first request frame, where the first request frame indicates a request for reconfiguration of a second link of the sensing measurement session, the first request frame carries information about the second link, and the information about the second link includes an identifier of the second link and a sensing measurement parameter of the second link.

In this implementation, for a case in which link reconfiguration is performed without terminating the sensing measurement session, the sensing initiating apparatus sends, to the sensing responding apparatus, the request frame used to request to perform link reconfiguration, and notifies, in the request frame, the sensing responding apparatus of the information about the second link that needs to be reconfigured. In a sensing process, the sensing initiating apparatus may reconfigure a new link based on a situation to continue a sensing activity, instead of establishing a new sensing measurement session. Compared with establishing a new sensing measurement session, this can reduce resource overheads. In addition, impact on sensing performance can also be reduced.

With reference to the first aspect, in some implementations of the first aspect, the first request frame includes a multi-link control field and a multi-link sensing measurement parameters element. The multi-link control field carries a type field, the type field indicates that the multi-link sensing measurement element is a reconfiguration multi-link sensing measurement parameters element, and the multi-link sensing measurement parameters element carries the information about the second link.

In this implementation, the first request frame may be a variant of a multi-link sensing measurement request frame. A frame format design of the multi-link sensing measurement request frame may indicate that the multi-link sensing measurement parameters element in the multi-link sensing measurement request frame is a reconfiguration multi-link sensing measurement parameters element, to provide a frame format design for reconfiguring a new link.

With reference to the first aspect, in some implementations of the first aspect, the multi-link control field further includes a first field. The first field indicates whether the first request frame includes a link change bitmap, and the link change bitmap is used to determine the to-be-removed first link and the second link that is requested to be reconfigured. When the first field indicates that the first request frame includes the link change bitmap, the multi-link sensing measurement parameters element further includes a link change bitmap field.

In this implementation, a detailed frame format design of the first request frame used to request reconfiguration of a new link is provided.

With reference to the first aspect, in some implementations of the first aspect, the multi-link sensing measurement parameters element further carries a multi-link sensing subelement field, and the multi-link sensing subelement field carries link-level sensing measurement parameters that are of the second link and that are based on different sensing measurement types.

In this implementation, different sensing measurement types may include a TB sensing measurement type, a non-TB sensing measurement type, and a sensing by proxy (sensing by proxy, SBP) type.

In addition, a multi-link sensing subelement carried in the multi-link sensing measurement parameters element carries the link-level sensing measurement parameters. Compared with establishing a new sensing measurement session to carry device-level sensing measurement parameters, this can reduce signaling overheads.

With reference to the first aspect, in some implementations of the first aspect, the first request frame further carries an identifier of the sensing measurement session. The first request frame carries a multi-link sensing measurement reconfiguration parameters element, and the multi-link sensing measurement reconfiguration parameters element carries the information about the second link that is requested to be reconfigured.

In this implementation, the first request frame may be a newly designed multi-link sensing measurement reconfiguration request frame in this application, and carries information about the new link that is requested to be reconfigured.

With reference to the first aspect, in some implementations of the first aspect, that the multi-link sensing measurement reconfiguration parameters element carries the information about the second link that is requested to be reconfigured includes: the multi-link sensing measurement reconfiguration parameters element includes a link profile of the second link, where the link profile includes the identifier of the second link and the sensing measurement parameter of the second link, the link profile further includes a sensing subelement, and the sensing subelement carries link-level sensing measurement parameters that are of the second link and that are based on different sensing measurement types.

In this implementation, a detailed frame format design of the multi-link sensing measurement reconfiguration request frame in this application is provided. In addition, the link profile in the multi-link sensing measurement reconfiguration request frame carries the link-level sensing measurement parameters of the reconfigured second link. Compared with establishing a new sensing measurement session to carry device-level sensing measurement parameters, this can reduce signaling overheads.

With reference to the first aspect, in some implementations of the first aspect, the method further includes: receiving a first response frame of the first request frame, where the first response frame includes a status code field, and the status code field indicates acceptance of the multi-link sensing measurement reconfiguration parameters element requested in the first request frame; or
the status code indicates partial acceptance of the multi-link sensing measurement reconfiguration parameters element requested in the first request frame, and the first response frame further carries identification information of an accepted link; or
the status code indicates rejection of the multi-link measurement reconfiguration parameters element requested in the first request frame, and the first response frame further carries a recommended sensing measurement setup parameter; or
the status code indicates rejection of the sensing measurement reconfiguration parameters element requested in the first request frame, and the multi-link sensing measurement reconfiguration parameters element does not carry a suggested sensing measurement setup parameter.

In this implementation, a detailed frame format design of a multi-link sensing measurement reconfiguration response frame in this application is provided. Specifically, the multi-link sensing measurement reconfiguration response frame carries the status code field indicating whether the sensing responding apparatus accepts the multi-link sensing measurement reconfiguration parameters element requested by the sensing initiating apparatus. With reference to the foregoing multi-link sensing measurement reconfiguration request frame, this application provides a solution for frame format designs of a link reconfiguration request frame and a response frame of the link reconfiguration request frame.

With reference to the first aspect, in some implementations of the first aspect, before sending the first request frame, the method further includes: receiving a second request frame, where the second request frame indicates a request for link reconfiguration performed for the sensing measurement session.

In this implementation, the method in the first aspect is performed by the sensing responder. The sensing responder sends the second request frame to the sensing initiator, to notify the sensing initiator that the sensing responder requests to perform link reconfiguration. This may be applied to a scenario in which the sensing initiator initiates a link reconfiguration request.

With reference to the first aspect, in some implementations of the first aspect, the method further includes: sending a second response frame, where the second response frame indicates an acknowledgment of reception of the second request frame.

In this implementation, for the link reconfiguration request initiated by the sensing responder, the sensing initiator sends a reception acknowledgment to the sensing responder. The second request frame and the second response frame corresponding to the second request frame in this implementation are mainly used for notification, so that the sensing responder notifies the initiator to perform link reconfiguration. Then, the sensing initiator may send the first request frame, where the first request frame carries the information about the reconfigured new link, as described in the foregoing other implementations.

With reference to the first aspect, in some implementations of the first aspect, the second request frame carries a link expiry exponent, and the link expiry exponent indicates duration of the timer for performing the link reconfiguration.

In this implementation, the second request frame carries the link expiry exponent indicating a time limit for performing link reconfiguration, and the new link needs to be completed before the timer indicated by the link expiry exponent expires.

With reference to the first aspect, in some implementations of the first aspect, the second request frame further carries a reconfiguration link bitmap field, and the reconfiguration link bitmap field indicates an identifier of the to-be-removed first link and the identifier of the second link that is requested to be reconfigured.

In this implementation, the second request frame may indicate information about the to-be-removed first link and the second link that is requested to be reconfigured, where the second link may be a link recommended by the sensing responder.

With reference to the first aspect, in some implementations of the first aspect, the method is applied to trigger-based sensing measurement or non-trigger-based sensing measurement.

The first aspect or any implementation of the first aspect is applicable to a TB sensing measurement exchange procedure or a non-TB sensing measurement exchange procedure, and can meet requirements for removing a link in different multi-link scenarios.

According to a second aspect, a method for sensing measurement is provided. The method may be performed by a communication apparatus or a module (for example, a chip or a circuit) used in a communication apparatus. This is not limited herein. For ease of description, the following uses the communication apparatus as an example for description. The communication apparatus may be, for example, a sensing initiator in a multi-link sensing scenario. The method may include: sending a first request frame, where the first request frame is used to request reconfiguration of a second link of a sensing measurement session, the first request frame carries information about the second link, and the information about the second link includes an identifier of the second link and a sensing measurement parameter of the second link; and receiving a first response frame of the first request frame.

The method in the second aspect or any one of the following implementations of the second aspect is mainly for a case in which a link is reconfigured. For beneficial technical effects of the method, refer to descriptions of a corresponding solution in the first aspect. Details are not described herein again.

With reference to the second aspect, in some implementations of the second aspect, the first request frame includes a multi-link control field and a multi-link sensing measurement parameters element. The multi-link control field includes a type field, the type field indicates that the multi-link sensing measurement parameters element is a reconfiguration multi-link sensing measurement parameters element, and the multi-link sensing measurement parameters element carries information about the second link.

With reference to the second aspect, in some implementations of the second aspect, the multi-link control field further includes a first field. The first field is used to determine whether the first request frame includes a link change bitmap, and the link change bitmap is used to determine a to-be-removed first link and the second link that is requested to be reconfigured. When the first field indicates that the first request frame includes the link change bitmap, the multi-link sensing measurement parameters element further includes a link change bitmap field.

With reference to the second aspect, in some implementations of the second aspect, the multi-link sensing measurement parameters element further carries a multi-link sensing subelement field, and the multi-link sensing subelement field carries link-level sensing measurement parameters that are of the second link and that are obtained based on different sensing measurement types.

With reference to the second aspect, in some implementations of the second aspect, the first request frame further carries an identifier of the sensing measurement session.

The first request frame carries a multi-link sensing measurement reconfiguration parameters element, and the multi-link sensing measurement reconfiguration parameters element carries the information about the second link that is requested to be reconfigured.

With reference to the second aspect, in some implementations of the second aspect, that the multi-link sensing measurement reconfiguration parameters element carries the information about the second link that is requested to be reconfigured includes:
the multi-link sensing measurement reconfiguration parameters element includes a link profile of the second link, where the link profile includes the identifier of the second link and the sensing measurement parameter of the second link, the link profile further includes a sensing subelement, and the sensing subelement carries link-level sensing measurement parameters that are of the second link and that are based on different sensing measurement types.

With reference to the second aspect, in some implementations of the second aspect, the first response frame includes a status code field, and the status code field indicates acceptance of the multi-link sensing measurement reconfiguration parameters element requested in the first request frame; or
the status code indicates partial acceptance of the multi-link sensing measurement reconfiguration parameters element requested in the first request frame, and the first response frame further carries identification information of an accepted link; or
the status code indicates rejection of the multi-link measurement reconfiguration parameters element requested in the first request frame, and the first response frame further carries a recommended sensing measurement setup parameter; or
the status code indicates rejection of the sensing measurement reconfiguration parameters element requested in the first request frame, and the first response frame does not carry a suggested sensing measurement setup parameter.

With reference to the second aspect, in some implementations of the second aspect, before sending the first request frame, the method further includes: receiving a second request frame, where the second request frame indicates a request for link reconfiguration performed for the sensing measurement session.

With reference to the second aspect, in some implementations of the second aspect, the method further includes: receiving a second response frame corresponding to the second request frame.

With reference to the second aspect, in some implementations of the second aspect, the second request frame carries information about duration of a timer for performing the link reconfiguration.

With reference to the second aspect, in some implementations of the second aspect, the second request frame further carries a reconfiguration link bitmap field, and the reconfiguration link bitmap field indicates an identifier of the to-be-removed first link and the identifier of the second link that is requested to be reconfigured.

According to a third aspect, a method for sensing measurement is provided. The method may be performed by a communication apparatus or a module (for example, a chip or a circuit) used in a communication apparatus. This is not limited herein. For ease of description, the following uses the communication apparatus as an example for description. The communication apparatus may be, for example, a sensing initiator or a sensing responder in a multi-link sensing scenario. The method may include: determining to remove a first link, where the first link is any one of a plurality of links of a sensing measurement session; and removing the first link after a timer expires, and terminating the sensing measurement session.

In the method in the third aspect, when a sensing initiating apparatus or a sensing responding apparatus needs to remove a link, the sensing initiating apparatus or the sensing responding apparatus removes the link after the timer expires. This is a parallel solution to the solution in the first aspect. This provides another solution for removing a link in a multi-link scenario.

With reference to the third aspect, in some implementations of the third aspect, determining to remove the first link includes: when it is determined that the first link needs to enter a power saving mode, determining to remove the first link.

In this implementation, a device for removing the link may be a non-AP MLD (which may be a sensing initiator or a sensing responder). When an affiliated STA of the non-AP MLD needs to enter a power saving mode, a link between the affiliated STA and a corresponding AP is removed after the affiliated STA enters the power saving mode. This implementation provides a solution for removing a corresponding link in a scenario in which an affiliated STA of the non-AP MLD enters the power saving mode.

According to a fourth aspect, a method for sensing measurement is provided. The method may be performed by a communication apparatus or a module (for example, a chip or a circuit) used in a communication apparatus. This is not limited herein. For ease of description, the following uses the communication apparatus as an example for description. The communication apparatus may be, for example, a sensing initiator in a multi-link sensing scenario. The method may include: determining a link type of a first link, where the first link is a to-be-removed link in a plurality of links of a sensing measurement session, and the link type includes a mandatory link, an optional link, or a redundant link; and removing the first link based on the link type of the first link and link request information used during establishment of the sensing measurement session, where the link request information indicates a requested minimum number of links.

In the method in the fourth aspect, when a sensing initiating apparatus or a sensing responding apparatus needs to remove a link, the sensing initiating apparatus or the sensing responding apparatus removes the link based on a link type of the to-be-removed link and different situations during establishment of the sensing measurement session. The solution in the fourth aspect and the solution in the first aspect are parallel solutions. When a link is removed in a multi-link scenario, in addition to the link type, different situations during establishment of the sensing measurement session are further considered, to adapt to a more complex link removal requirement or multi-link scenario.

With reference to the fourth aspect, in some implementations of the fourth aspect, removing the first link based on the link type of the first link and the link request information used during establishment of the sensing measurement session includes: if a number of the plurality of links is equal to the minimum number of links, and the first link is a mandatory link or an optional link, removing the first link after a timer expires; and the method further includes: terminating the sensing measurement session.

In this implementation, if the number of links requested during establishment of the sensing measurement session is equal to the minimum number of links, it indicates that no redundant link exists in the sensing measurement session. If the to-be-removed first link is a mandatory link or an optional link, the first link is removed after the timer expires, and the sensing measurement session is terminated. When the first link is a mandatory link, the sensing measurement session is terminated, so that an invalid sensing result report generated because a sensing activity on another link continues and overheads and a waste of air interface resources and signaling due to reporting of the sensing result report can be avoided.

With reference to the fourth aspect, in some implementations of the fourth aspect, removing the first link based on the link type of the first link and the link request information used during establishment of the sensing measurement session includes: if a number of the plurality of links is equal to the minimum number of links, and the first link is an optional link, removing the first link after a timer expires; and the method further includes: performing link reconfiguration before the timer expires.

In this implementation, if the number of links requested during establishment of the sensing measurement session is equal to the minimum number of links, it indicates that no redundant link exists in the sensing measurement session. If the to-be-removed first link is an optional link, the first link is removed after the timer expires, and a new link is reconfigured before the timer expires, so that the sensing measurement session does not need to be terminated. After reconfiguration of a new second link is completed, a sensing activity on the first link may be transferred to the second link to continue, and the sensing measurement session is not affected by removal of the first link. Compared with re-establishing a sensing measurement session, this can also reduce overheads of air interface resources and signaling.

With reference to the fourth aspect, in some implementations of the fourth aspect, removing the first link based on the link type of the first link and the link request information used during establishment of the sensing measurement session includes: if a number of the plurality of links is greater than the minimum number of links, and the first link is a mandatory link or an optional link, removing the first link after a timer expires; and the method further includes: terminating the sensing measurement session.

In this implementation, if the number of links requested during establishment of the sensing measurement session is greater than the minimum number of links, it indicates that the redundant link exists in the sensing measurement session. If the to-be-removed first link is an optional link, the first link is removed after the timer expires, and a new link is reconfigured before the timer expires, so that the sensing measurement session does not need to be terminated. After reconfiguration of a new second link is completed, a sensing activity on the first link may be transferred to the second link to continue, and the sensing measurement session is not affected by removal of the first link. Compared with re-establishing a sensing measurement session, this can also reduce overheads of air interface resources and signaling.

With reference to the fourth aspect, in some implementations of the fourth aspect, removing the first link based on the link type of the first link and the link request information used during establishment of the sensing measurement session includes: if a number of the plurality of links is greater than the minimum number of links, and the first link is an optional link, removing the first link after a timer expires; and the method further includes: performing link reconfiguration before the timer expires.

In this implementation, if the number of links requested during establishment of the sensing measurement session is greater than the minimum number of links, it indicates that the redundant link exists in the sensing measurement session. If the to-be-removed first link is an optional link, the first link is removed after the timer expires, and a new link is reconfigured before the timer expires, so that the sensing measurement session does not need to be terminated. After reconfiguration of a new second link is completed, a sensing activity on the first link may be transferred to the second link to continue, and the sensing measurement session is not affected by removal of the first link.

With reference to the fourth aspect, in some implementations of the fourth aspect, removing the first link based on the link type of the first link and the link request information used during establishment of the sensing measurement session includes: if a number of the plurality of links is greater than the minimum number of links, and the first link is a redundant link, implicitly removing the first link after a timer expires.

In this implementation, if the number of links requested during establishment of the sensing measurement session is greater than the minimum number of links, it indicates that the redundant link exists in the sensing measurement session. If the to-be-removed first link is a redundant link, the first link is removed after the timer expires, and the sensing measurement session on another link is not affected by removal of the first link.

According to a fifth aspect, a method for sensing measurement is provided. The method may be performed by a communication apparatus or a module (for example, a chip or a circuit) used in a communication apparatus. This is not limited herein. For ease of description, the following uses the communication apparatus as an example for description. The communication apparatus may be, for example, a sensing initiator in a multi-link sensing scenario. The method may include: sending first information, where the first information is used to determine whether a link that is requested to be established for a sensing measurement session includes a redundant link, and the link that is requested to be established for the sensing measurement session includes at least one of a mandatory link and an optional link; and performing sensing measurement setup based on the first information.

Based on this technical solution, in a process of multi-link sensing measurement setup, a sensing initiator adds an indication of the redundant link, and a sensing receiver may determine, based on the indication, whether the redundant link exists in the sensing measurement session. Setting of the redundant link can improve reliability and flexibility of a sensing measurement exchange. In addition, removing a link in a multi-link scenario provides a basis for performing different processing based on link types.

With reference to the fifth aspect, in some implementations of the fifth aspect, sending the first information includes: sending a multi-link sensing measurement request frame, where the multi-link sensing measurement request frame carries the first information.

In this implementation, the first information used to determine whether the redundant link exists in a plurality of links corresponding to the sensing measurement session may be carried in the multi-link sensing measurement request frame.

With reference to the fifth aspect, in some implementations of the fifth aspect, the first information includes a minimum-number-of-links field and a maximum-number-of-links field, the minimum-number-of-links field indicates a requested minimum number of links, and the maximum-number-of-links field indicates a requested maximum number of links; and
if a value indicated by the minimum number of links is equal to a value indicated by the maximum number of links, the link that is requested to be established for the sensing measurement session does not include the redundant link; or
if a value indicated by the minimum number of links is not equal to a value indicated by the maximum number of links, the link that is requested to be established for the sensing measurement session includes the redundant link.

In this implementation, the minimum-number-of-links field and the maximum-number-of-links field are designed, which increases flexibility of sensing measurement setup. In addition, values of the two fields can implicitly indicate (or imply) whether the redundant link exists.

With reference to the fifth aspect, in some implementations of the fifth aspect, the first information includes a redundancy indication field, and the redundancy indication field indicates whether the optional link in the link that is requested to be established for the sensing measurement session is a redundant link.

In this implementation, the redundancy indication field is designed to indicate whether the optional link corresponding to the sensing measurement session is a redundant link, and indicate whether the redundant link exists in the sensing measurement session, which increases flexibility of sensing measurement setup.

According to a sixth aspect, a communication apparatus is provided, including modules or units configured to perform the method in any one of the first aspect to the fifth aspect or the method in any one of the possible implementations of any one of the first aspect to the fifth aspect. The apparatus may be a network device or a terminal device, or may be a module (for example, a chip, a chip system, or a circuit) of a network device or a terminal device. Optionally, the network device or the terminal device is an MLD device. For example, the network device is an AP MLD, and the terminal device is a non-AP MLD.

According to a seventh aspect, a communication apparatus is provided, including a processor. The processor is coupled to a memory, and may be configured to perform the method in any one of the first aspect to the fifth aspect. In a possible implementation, the communication apparatus further includes the memory. In another possible implementation, the communication apparatus further includes a communication interface, and the processor and the memory are coupled to the communication interface.

In an implementation, the communication apparatus is a network device or a terminal device. When the communication apparatus is a network device or a terminal device, the communication interface may be a transceiver, or an input/output interface. The transceiver may be a transceiver circuit, and the input/output interface may be an input/output circuit. In another implementation, the communication apparatus is a chip or a chip system. In this implementation, the communication interface may be an input/output interface, an interface circuit, an output circuit, an input circuit, a pin, a related circuit, or the like in the chip or the chip system. The processor may alternatively be embodied as a processing circuit, an integrated circuit, a logic circuit, or the like.

According to an eighth aspect, a communication apparatus is provided, including an input circuit, a processing circuit, and an output circuit. The processing circuit may receive a signal through the input circuit, and perform related processing and/or operations in the method in any one of the first aspect to the fifth aspect or any one of the possible implementations of any one of the first aspect to the fifth aspect; or may transmit a signal through the output circuit.

In a specific implementation process, the communication apparatus may be a chip, the input circuit may be an input pin, the output circuit may be an output pin, and the processing circuit may be a transistor, a gate circuit, a trigger, any logic circuits, or the like. The signal received by the input circuit may include but is not limited to that the signal is received and input by a receiver device, and the signal output by the output circuit may include but is not limited to that the signal is output to a transmitter device and transmitted by the transmitter device. In addition, the input circuit and the output circuit may be different circuits, or may be a same circuit, and in this case, the circuit is used as the input circuit and the output circuit at different moments. The input circuit and/or the output circuit may also be referred to as an interface circuit. Specific implementations of the processor and various circuits are not limited in embodiments of this application.

According to a ninth aspect, a computer program product is provided. The computer program product includes a computer program (which may also be referred to as code or instructions). When the computer program is run, a computer is enabled to perform the method in any one of the first aspect to the fifth aspect or any one of the possible implementations of any one of the first aspect to the fifth aspect.

According to a tenth aspect, a computer-readable medium is provided. The computer-readable medium stores a computer program (which may also be referred to as code or instructions). When the computer program is run on a computer, the computer is enabled to perform the method in any one of the first aspect to the fifth aspect or any one of the possible implementations of any one of the first aspect to the fifth aspect.

According to an eleventh aspect, a chip (or a chip system) is provided, including a memory and a processor. The memory is configured to store a computer program, and the processor is configured to: invoke the computer program from the memory and run the computer program, to enable a communication device in which the chip (or the chip system) is mounted to perform the method in any one of the first aspect to the fifth aspect or any one of the possible implementations of any one of the first aspect to the fifth aspect.

The chip system may include an input circuit or an interface configured to send information and/or data, and an output circuit or an interface configured to receive information and/or data. The input circuit and the output circuit may be a same circuit, for example, referred to as an interface circuit.

According to a twelfth aspect, a communication system is provided, including at least one of the foregoing sensing initiator and sensing responder.

### BRIEF DESCRIPTION OF DRAWINGS

FIG. 1 is a diagram of a sensing measurement request frame action field format;
FIG. 2 is a diagram of a sensing measurement parameters element;
FIG. 3 is a diagram of a sensing measurement parameters field in a sensing measurement parameters element;
FIG. 4 is a diagram of a sensing measurement response frame action field format;
FIG. 5 is a diagram of an MLD and an affiliated STA communication system;
FIG. 6 is a diagram of a frame format of a multi-link element;
FIG. 7 is a schematic flowchart of multi-link sensing;
FIG. 8 is a schematic flowchart of a method for sensing measurement according to this application;
FIG. 9 is a diagram of a frame format of a sensing measurement termination frame action field according to this application;
FIG. 10 is a diagram of a frame format of a measurement session termination frame control field according to this application;
FIG. 11 is a schematic flowchart of another method for sensing measurement according to this application;
FIG. 12 is a schematic flowchart of another method for sensing measurement according to this application;
FIG. 13 is an example of an improved multi-link sensing measurement request frame according to this application;
FIG. 14 is another example of an improved multi-link sensing measurement request frame according to this application;
FIG. 15 is a diagram of a frame format of a newly designed multi-link sensing measurement reconfiguration request frame according to this application;
FIG. 16 is a diagram of a frame format of a newly designed multi-link sensing measurement reconfiguration response frame according to this application;
FIG. 17 is an interaction diagram of a link reconfiguration procedure initiated by a sensing initiator;
FIG. 18 is an interaction diagram of a link reconfiguration procedure in which a sensing responder requests to perform link reconfiguration;
FIG. 19 is a diagram of a frame format of a link reconfiguration request frame according to this application;
FIG. 20 is a diagram of a frame format of a link reconfiguration response frame according to this application;
FIG. 21 is an interaction diagram of another method for sensing measurement according to this application;
FIG. 22 is an example in which a multi-link sensing measurement request frame carries first information;
FIG. 23 is another example in which a multi-link sensing measurement request frame carries first information;
FIG. 24 is still another example in which a multi-link sensing measurement request frame carries first information;
FIG. 25 is a diagram of a structure of a communication apparatus according to this application;
FIG. 26 is a diagram of a structure of another communication apparatus according to this application; and
FIG. 27 is a diagram of a structure of another communication apparatus according to this application.

### DESCRIPTION OF EMBODIMENTS

The following describes technical solutions of this application with reference to accompanying drawings.

For ease of understanding the technical solutions of this application, related technologies or concepts are first briefly described.

IEEE 802.11bf is a next-generation wireless standard for WLAN sensing (WLAN sensing). WLAN sensing is a feature that a device with a WLAN sensing capability uses a received radio signal to determine a predetermined target (such as an object, an animal, or a person) in a given environment. The feature includes a distance, a direction, a speed, movement, and a behavior of the target.

The existing IEEE 802.11bf standard is related to four roles.

Sensing initiator (sensing initiator): a device that initiates a sensing behavior.

Sensing responder (sensing responder): a device that responds to the sensing behavior initiated by the sensing initiator and participates in the sensing behavior.

Sensing transmitter (sensing transmitter (TX)): a device that sends a sensing PPDU.

Sensing receiver (sensing receiver (RX)): a device that receives a sensing physical layer protocol data unit (physical layer protocol data unit, PPDU).

The existing IEEE 802.11bf standard is based on a single link. In 11bf, sensing measurement is presented in a form of session. A sensing measurement procedure includes a sensing capability exchange, sensing measurement setup, a sensing measurement exchange, and sensing measurement termination.

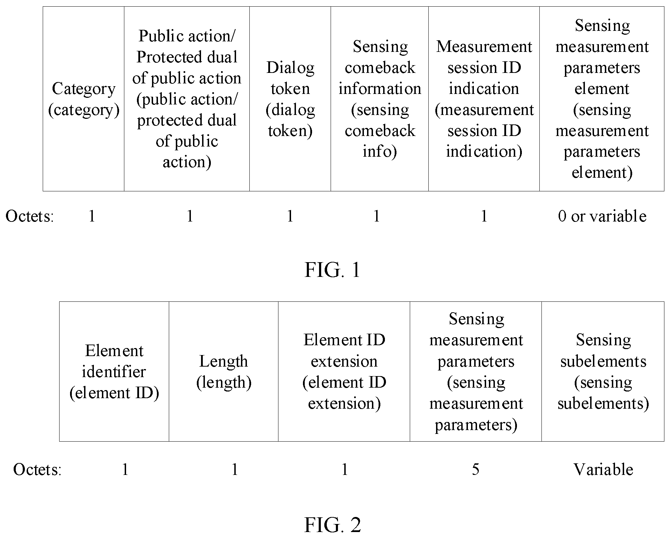

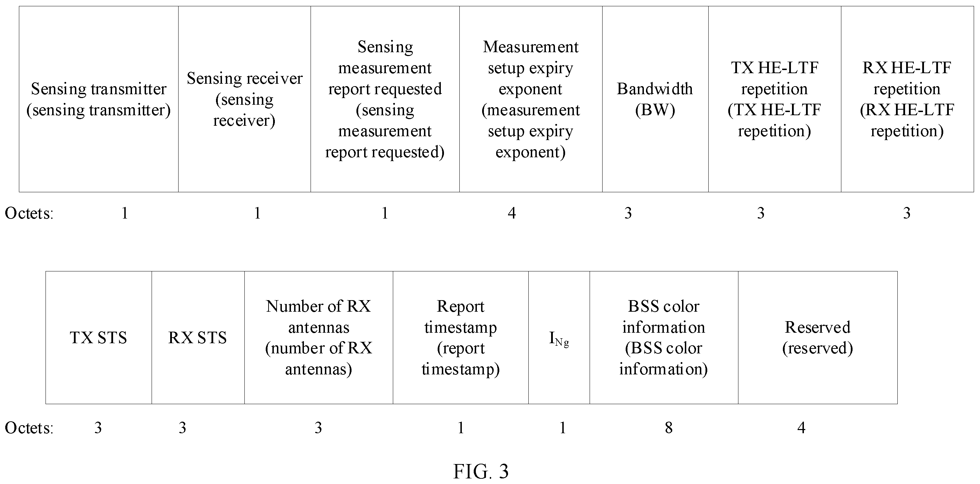

A sensing measurement setup procedure includes the following.
(1) The sensing initiator sends a sensing measurement request frame (sensing measurement request frame) to the sensing responder to initiate sensing measurement setup, and sets sensing measurement parameters (sensing measurement parameters), sensing types ((trigger-based, TB)/non-TB or (sensing by proxy, SBP)), and corresponding sensing measurement parameters. A sensing measurement request frame action field format (sensing measurement request frame action field format) is shown in FIG. 1. Fields and elements that are included in the sensing measurement parameters element (sensing measurement parameters element) in a sensing measurement request frame action field are shown in FIG. 2. A sensing measurement parameters field (sensing measurement parameters field) in the sensing measurement parameters element is shown in FIG. 3.

The sensing measurement parameters element may carry different sensing subelements, where the sensing subelements may be a TB sensing specific subelement (TB sensing specific subelement), a non-TB sensing specific subelement (Non-TB sensing specific subelement), and an SBP specific subelement (SBP specific subelement).

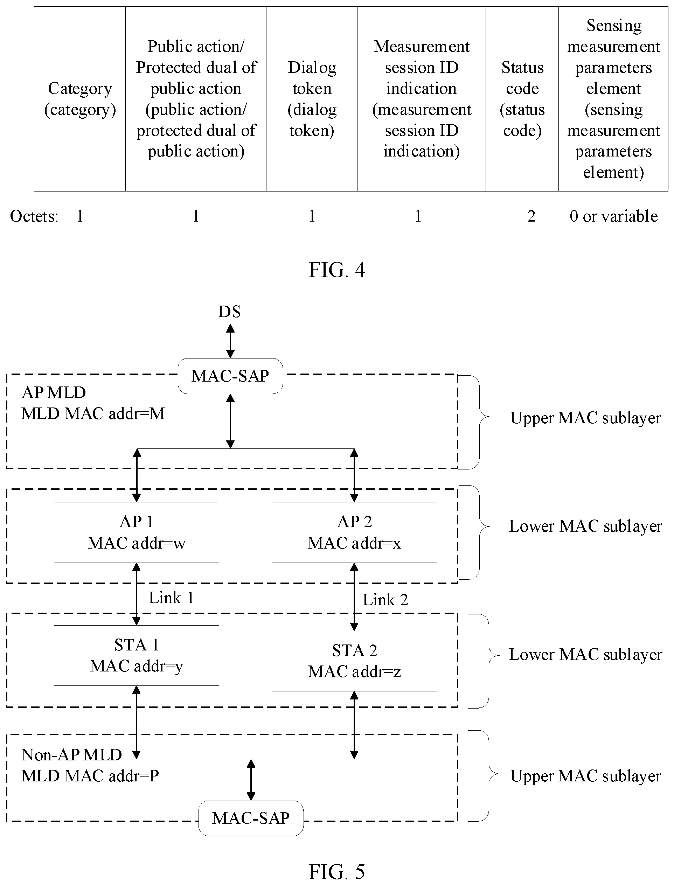

(2) After receiving the sensing measurement setup request frame, the sensing responder sends a sensing measurement response frame (sensing measurement response frame) to set up sensing. A sensing measurement response frame action field format (action field format) is shown in FIG. 4. In addition, the sensing measurement response frame complies with the following rule:

If the sensing responder accepts the sensing measurement parameters element (sensing measurement parameters element) requested in the sensing measurement setup request frame, status code in the sensing measurement setup response frame is set to success; or
if the sensing responder rejects the sensing measurement parameters element requested in the sensing measurement setup request frame, but provides a recommended sensing measurement setup parameter in the sensing measurement setup response frame, status code is set to rejected_with_suggested_changes; or
if the sensing responder rejects the sensing measurement parameters element requested in the sensing measurement setup request frame and does not provide a recommended sensing measurement setup parameter, status code is set to request_declined.

After sensing measurement setup is completed, the sensing initiator initiates one or more sensing measurement exchanges (sensing measurement exchanges) based on a sensing measurement parameter (or referred to as an operational parameter of sensing measurement) negotiated in a sensing measurement setup process according to a requirement of the sensing initiator. There may be two forms for a sensing measurement exchange: a trigger-based sensing measurement exchange (TB sensing measurement exchange) and a non-trigger-based sensing measurement exchange (Non-TB sensing measurement exchange). The trigger-based sensing measurement instance is initiated by an AP as a sensing initiator, and the non-trigger-based sensing measurement instance is initiated by a non-AP STA as a sensing initiator.

Sensing measurement termination includes explicit termination and implicit termination.
1. Explicit termination: Any one of the sensing initiator or the sensing responder sends a sensing measurement termination frame (sensing measurement termination frame) to terminate a sensing measurement session.
2. Implicit termination: The sensing initiator or the sensing responder terminates a sensing measurement session without sending a sensing measurement termination frame, that is, terminates the sensing measurement session without sending the frame for an exchange. Alternatively, another manner of terminating the sensing measurement session other than explicitly terminating the sensing measurement session is implicit termination. In an example, the sensing initiator sets a measurement session expiry timer (measurement session expiry timer) in the sensing setup process. When detecting that there is no frame exchange within duration of the timer, the sensing initiator implicitly terminates the sensing measurement session.

Currently, sensing in 802.11bf mainly focuses on single-link scenarios. IEEE 802.11be (namely, Wi-Fi 7) introduces a multi-link feature. With popularization of Wi-Fi 7, there will be more multi-link devices (multi-link devices, MLDs).

FIG. 5 is a diagram of an MLD and an affiliated STA communication system. As shown in FIG. 5, the MLD may include one or more affiliated (affiliated) stations, and each affiliated station has its own MAC address (MAC address, referred to as MAC addr for short). The affiliated station has a plurality of lower MAC addresses (lower MAC addresses), and the MLD has one upper MAC address (upper MAC address).

The MLD may have a capability of establishing a plurality of links at the same time. If different links can perform receiving and sending respectively at the same time (for example, it is assumed that there are two links, one link performs sending, and one link performs receiving), this mode is referred to as simultaneous transmit and receive (simultaneous transmit and receive, STR). If a plurality of links can only simultaneously perform receiving or sending (for example, two links need to simultaneously perform sending or simultaneously perform receiving), this mode is referred to as non-simultaneous transmit and receive (non-simultaneous transmit and receive, NSTR).

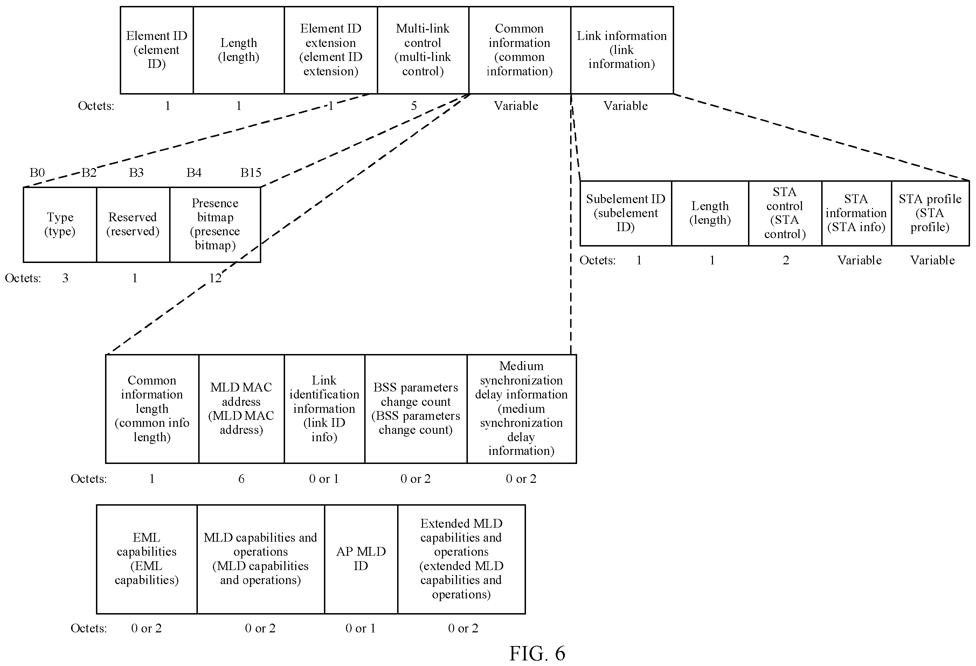

The STA of the MLD needs to notify multi-link capabilities and multi-link information of other STAs in the MLD by including a basic variant multi-link element in some management frames transmitted by the STA. The multi-link element may be carried in a beacon frame, a multi-link probe response frame, and a (re)association response frame that are sent by an AP, or may be carried in a probe request frame and a (re)association request frame that are sent by the STA. A format of the multi-link element (Multi-link element) is shown in FIG. 6.

In a multi-link scenario, when an AP MLD and a non-AP MLD perform multi-link sensing, if the AP MLD needs to remove (remove), delete (delete), or disable (disable) a link, or the non-AP MLD needs to remove, delete, or disable a link, or an affiliated STA of the non-AP MLD enters a power saving mode (power saving mode), sensing measurement or a sensing result may be affected. The technical solutions provided in this application may be applied to these scenarios.

The technical solutions provided in embodiments of this application may be applied to wireless local area network (wireless local area network, WLAN) scenarios, for example, wireless local area network scenarios that support Institute of Electrical and Electronics Engineers (Institute of Electrical and Electronics Engineers, IEEE) 802.11-related standards, for example, an 802.11a/b/g standard, an 802.11n standard, an 802.11ac standard, an 802.11ax standard, an 802.11be standard, an 802.11bn standard/UHR standard, an 802.11ad standard, an 802.11ay standard, an ultra-wideband (ultra-wideband, UWB) standard, 802.15 series standards, and 802.11bf series standards.

The following describes the technical solutions in this application.

The technical solutions of this application are mainly for a scenario in which an MLD performs multi-link sensing in WLAN sensing.

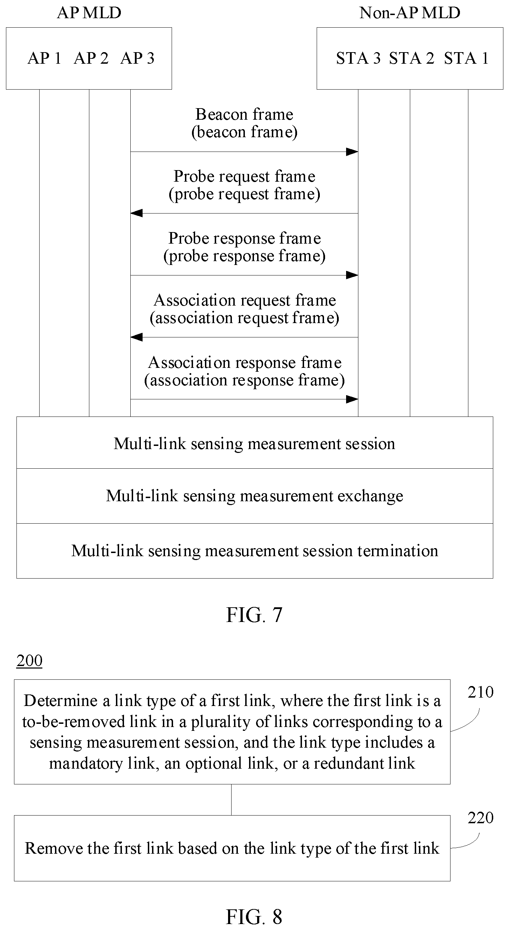

FIG. 7 is a schematic flowchart of multi-link sensing. Three main procedures related in embodiments of this application include a multi-link sensing measurement session (multi-link sensing measurement session), a multi-link sensing measurement exchange (multi-link sensing measurement exchange), and multi-link sensing measurement session termination (multi-link sensing measurement session termination).

In embodiments of this application, in a sensing measurement setup process, a number of links (links) that are actually established is allowed to be greater than a requested minimum number of links. That is, existence of a redundant link is allowed, to improve reliability of a sensing measurement exchange. In the sensing measurement exchange process, if a sensing initiator or a sensing responder expects to remove one or more links, embodiments of this application provide corresponding solutions. In addition, multi-link sensing measurement termination in embodiments of this application may include implicit closing of a link and implicit termination of a sensing measurement session. For details, refer to the following embodiments.

Names of frames (for example, a request frame and a response frame), messages/information, fields, and the like in embodiments of this application are provided for clear description of the technical solutions. These names shall not constitute any limitation on the essence of the technical solutions. Rather, these names focus on actual roles or functions of the frames, the messages/information, the fields, and the like in embodiments. The names of the frames, the messages/information, the fields, and the like in embodiments of this specification are merely examples. In a future communication system (for example, 6G or another short-range communication system), the frames, the messages/information, the fields, and the like may have other names.

### Solution 1

FIG. 8 is a schematic flowchart of a method for sensing measurement according to this application.

210: A multi-link device determines a link type of a first link, where the first link is a to-be-removed link in a plurality of links corresponding to a sensing measurement session, and the link type includes a mandatory link, an optional link, or a redundant link.

The mandatory link is a link that is indispensable or essential for the sensing measurement session. The optional link is a link that is required for the sensing measurement session but not essential. The redundant link is a backup link of the mandatory link or the optional link.

For example, a sensing measurement session in an application scenario requires sensing data on two links, where the two links have to include a link 1, and there may be no requirement on the other link. It is assumed that three links are established in a sensing measurement setup phase, where the three links include the link 1 that is mandatory, a link 2, and a link 3. In this case, among the three links, the link 1 is a mandatory link, and the link 2 or the link 3 is an optional link. When one of the link 2 or the link 3 is an optional link, the other one of the link 2 or the link 3 is a redundant link. For example, if the link 2 is an optional link, the link 3 is a redundant link. Alternatively, if the link 3 is an optional link, the link 2 is a redundant link.

The redundant link is a link provided in this application to improve reliability of a sensing measurement exchange. In a possible scenario, if the optional link needs to be removed, the redundant link may take over as a new optional link.

There may be one or more first links, second links, and the like described in embodiments of this application. For example, removing the first link may mean removing one or more first links, and reconfiguring the second link may mean reconfiguring one or more second links. This is not limited.

In embodiments of this application, "a plurality of" means two or more.

220: The multi-link device removes the first link based on the link type of the first link.

In this application, "removing" a link may alternatively be expressed as "closing" a link, "disabling (disabling)" a link, or the like. After the link is removed or closed, the link does not exist and parameter configurations related to the link also do not exist. Disabling the link means that the link is stopped from being used, but the parameter configurations related to the link still exist. For example, an AP MLD may remove, delete, or disable one or more links. A non-AP MLD may remove, delete, or disable one or more links. For example, if an affiliated STA of the non-AP MLD enters a power saving mode, a link established between the affiliated STA and the AP is closed after the affiliated STA enters the power saving mode.

Based on different link types of the first link, removing the first link may include the following possible cases.

In a possible case, the first link is a mandatory link. In this case, the multi-link device removes the first link after a timer expires. Further, because the mandatory link is removed, the multi-link device may further terminate the sensing measurement session. For example, the sensing measurement session is explicitly terminated or implicitly terminated. This is not limited.

In another possible case, the first link is an optional link. In this case, in an implementation, the multi-link device may remove the first link after a timer expires, and further implicitly terminate the sensing measurement session. In another implementation, the multi-link device may remove the first link after a timer expires, and perform link reconfiguration before the timer expires. Through link reconfiguration, a new optional link may be established to continue to perform sensing measurement. A link reconfiguration procedure is described in detail in the following.

In addition, "after the timer expires" in embodiments may be understood as including: "when the timer expires", "the timer times out", or "duration of the timer ends".

In addition, if the multi-link device in the method 200 is an AP MLD (which may be a sensing initiating apparatus or a sensing responding apparatus), the timer in the method 200 may be an AP removal timer (AP remover timer) on an AP-MLD side, or may be a newly added timer used to remove a link. If the multi-link device in the method 200 is a non-AP MLD (which may be a sensing initiating apparatus or a sensing responding apparatus), the timer in the method 200 may be a timer that is newly added on a non-AP MLD side and used to remove a link. In addition, the timer may alternatively be a specified default timer. This is not limited in embodiments of this application.

In still another possible case, the first link is a redundant link. In this case, the multi-link device may remove the first link after a timer expires.

The method 200 is applicable to both a sensing initiator and a sensing responder. For example, the method 200 may be performed by the AP MLD, or may be performed by the non-AP MLD. Correspondingly, the multi-link device in the method 200 may be specifically an AP MLD or a non-AP MLD.

The method is applicable to both the AP MLD and the non-AP MLD.

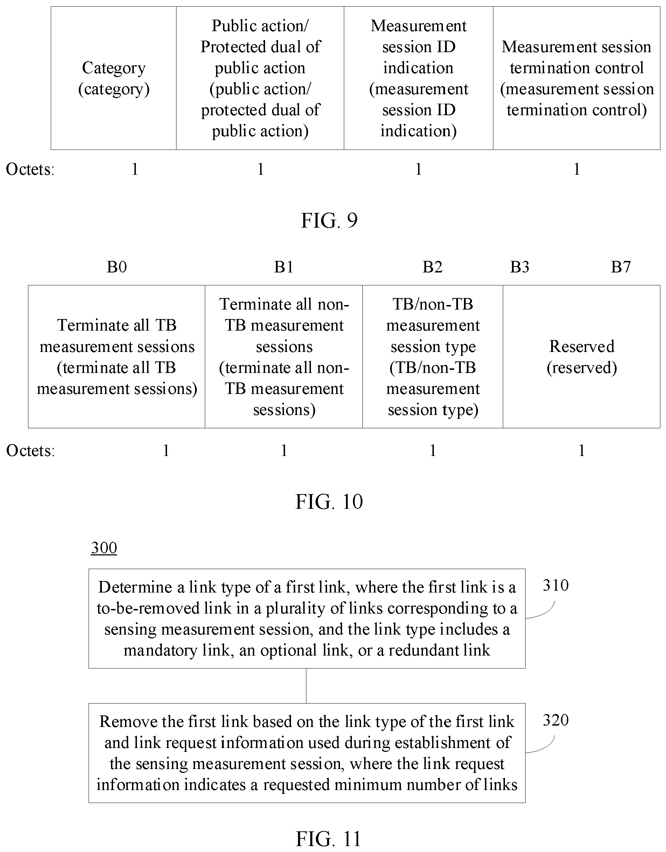

For example, if the AP MLD expects to remove the first link, the AP MLD performs a corresponding operation based on the type of the first link after announcing, in a beacon frame (beacon frame), that the first link needs to be removed. For another example, if the to-be-removed first link is a mandatory link, the AP MLD automatically closes the first link after the timer expires. In addition, the AP MLD terminates (for example, implicitly terminates) the sensing measurement session. If the to-be-removed first link is an optional link of the sensing measurement session, the AP MLD may perform the following two behaviors: The AP MLD closes the first link after the timer expires, and terminates the sensing measurement session; or the AP MLD reconfigures a new second link in the current sensing measurement session, so that the sensing measurement session continues. A procedure of reconfiguring the second link needs to be completed before the timer expires. For another example, if the to-be-removed first link is a redundant link of the sensing measurement session, the AP MLD removes the redundant link after the timer expires, and work of a sensing exchange on another link is not affected. Optionally, the beacon frame sent by the AP MLD may carry the timer, or the beacon frame does not carry the timer. In this case, the timer may have specified default duration. In still another example, if the AP MLD establishes a same sensing measurement session with a plurality of non-AP MLDs, and at least one of a plurality of links established between the AP MLD and the plurality of non-AP MLDs is removed, deleted, or disabled, after the AP MLD and a non-AP MLD whose link is closed terminate the sensing measurement session, the AP MLD further needs to send a sensing measurement termination frame to other non-AP MLDs whose links are not closed, to explicitly notify the non-AP MLDs whose links are not closed to terminate the sensing measurement session. The sensing measurement termination frame may reuse a frame format in 11bf, and the frame format is shown in FIG. 9 and FIG. 10. FIG. 9 is a diagram of a frame format of a sensing measurement termination frame action field. FIG. 10 is a diagram of a frame format of a sensing measurement termination frame control field.

The non-AP MLD may also remove, delete, or disable a link. For example, if a first link established between an affiliated STA of the non-AP MLD and an AP needs to enter a power saving mode (power saving mode) or a low power mode, or the non-AP MLD needs to remove the first link for another reason, the non-AP MLD performs a corresponding operation based on a link type of the to-be-removed first link. For example, if the to-be-removed first link is a mandatory link of the sensing measurement session, after the affiliated STA enters the power saving mode, the first link is closed, and the sensing measurement session is terminated (for example, implicitly terminated or explicitly terminated). If the first link is an optional link of the sensing measurement session, the non-AP MLD may have the following two behaviors: The first link is automatically closed after the affiliated STA of the non-AP MLD enters the power saving mode. In addition, because the optional link is also required for the sensing measurement session, the non-AP MLD further terminates (for example, implicitly terminates) the sensing measurement session. Alternatively, the non-AP MLD reconfigures a new second link in the current sensing measurement session. A process of establishing the second link needs to be completed before the timer expires. After the timer expires, the first link is automatically closed. If the to-be-removed first link is a redundant link, the non-AP MLD removes the first link after the timer expires, and a sensing exchange of another link is not affected.

In embodiments of this application, reasons for removing a link by the multi-link device are not limited, for example, may include but are not limited to the following: A sensing result of a link is not expected by the multi-link device, a sensing scenario is switched, a link between an affiliated STA of the non-AP MLD and an AP needs to be removed because the affiliated STA needs to enter the power saving mode, there are other service requirements, there is interference in an environment, and the like.

The method 200 is a solution, provided in this application, for removing a link in the multi-link scenario. The following further provides another solution. The following provides descriptions with reference to FIG. 3.

### Solution 2

FIG. 11 is a schematic flowchart of another method for sensing measurement according to this application.

310: A multi-link device determines a link type of a first link.

For step 310, refer to the descriptions of step 210. Details are not described again.

320: The multi-link device removes the first link based on the link type of the first link and link request information used during establishment of a sensing measurement session. The link request information indicates a requested minimum number of links.

In the method 300, the multi-link device performs, based on the link type of the first link and the link request information used during establishment of the sensing measurement session, related processing of removing the first link. Specifically, the multi-link device first determines that a number of links of the sensing measurement session is greater than or equal to the minimum number of links that is requested during establishment of the sensing measurement session, and then further performs a related operation of removing the first link with reference to the link type of the to-be-removed first link. In general, this relates to two possible cases.

### Case 1

If the number of links of the sensing measurement session is equal to the minimum number of links that is requested during establishment of the sensing measurement session, the multi-link device further has the following possible implementations based on the link type of the first link:
1. If the first link is a mandatory link of the sensing measurement session, the multi-link device removes the first link after a timer expires. In addition, because the first link is a mandatory link, the multi-link device terminates the sensing measurement session after the timer expires, for example, implicitly or explicitly terminates the sensing measurement session.
2. If the first link is an optional link of the sensing measurement session, the multi-link device may have the following two implementations:
   (1) The multi-link device closes the first link after a timer expires. In addition, because the closed first link is an optional link but also a link required by the sensing measurement session, the sensing measurement session may be further terminated after the timer expires. For example, the sensing measurement session is implicitly terminated or explicitly terminated.
   (2) The multi-link device performs link reconfiguration. Specifically, the multi-link device re-establishes a new link (which is, for example, referred to as a second link) in the current sensing measurement session, so that sensing measurement can continue to be performed on the second link. A process of establishing the second link needs to be completed before the timer expires or when the timer expires.

In embodiments of this application, "performing link reconfiguration" means performing or completing an entire link reconfiguration procedure.

### Case 2

If the number of links of the sensing measurement session is greater than the minimum number of links that is requested during establishment of the sensing measurement session, the multi-link device may include the following possible implementations:
1. If the first link is a mandatory link of the sensing measurement session, the multi-link device closes the first link after a timer expires. In addition, because the closed first link is a mandatory link, the multi-link device further terminates the sensing measurement session, for example, implicitly or explicitly terminates the sensing measurement session.
2. If the first link is an optional link of the sensing measurement session, the multi-link device may include the following two implementations:
   (1) The multi-link device closes the first link after a timer expires, and further terminates the sensing measurement session.
   (2) The multi-link device reconfigures a new link before the timer expires, and closes the first link after the timer expires. In this implementation, after configuration of the new link is completed, the sensing measurement session can continue on the reconfigured new link.
3. If the first link is a redundant link of the sensing measurement session, the multi-link device closes the first link after a timer expires, in other words, terminates work of the sensing measurement session on the first link, and the sensing measurement session works normally on another link.

It can be learned that in some of the foregoing implementations, for example, when the to-be-removed first link is an optional link and the multi-link device performs link reconfiguration before the timer expires, or when the first link is a redundant link, the multi-link device removes the first link but does not terminate the sensing measurement session.

In addition, if the to-be-removed first link is a redundant link, after the redundant link is closed, a sensing measurement exchange continues to be performed on the another link without being affected, and the sensing measurement session continues. When the to-be-removed first link is a mandatory link, the multi-link device closes the first link and terminates the sensing measurement session after the timer expires, so that an invalid sensing report generated on another link other than the first link can be avoided, and unnecessary air interface occupation and a waste of resources due to continued sensing exchanges on the another link can be further avoided. In addition, when the optional link is removed, the multi-link device may choose to reconfigure a link, to ensure that current sensing continues to be performed.

The method 300 is applicable to both a sensing initiator and a sensing responder. For example, the method 300 may be performed by an AP MLD, or may be performed by a non-AP MLD. Correspondingly, the multi-link device in the method 300 may be specifically an AP MLD or a non-AP MLD.

In addition, a solution, for example, the following Solution 3, for removing a link in the multi-link scenario is further provided.

### Solution 3

In Solution 3, if a multi-link device determines to remove a first link, the multi-link device removes the first link after a timer expires, and terminates a sensing measurement session. The first link is any one of a plurality of links of the sensing measurement session. The sensing measurement session may be implicitly terminated or explicitly terminated. This is not limited.

Similarly, Solution 3 is applicable to both an AP MLD and a non-AP MLD. For example, after announcing, in a beacon frame, that the first link needs to be removed, the AP MLD closes the first link after the timer expires. In addition, the sensing measurement session is terminated. The timer may be set by default, or may be carried in the beacon frame of the AP MLD. For another example, an affiliated STA of the non-AP MLD enters a power saving mode (power saving mode), which is also referred to as a sleep mode. Then, a first link established between the affiliated STA and an AP is automatically closed, and the sensing measurement session is also terminated (for example, implicitly terminated or explicitly terminated). In addition, optionally, before the affiliated STA enters the power saving mode, the non-AP MLD initiates a link reconfiguration request in the current sensing measurement session. Reconfiguration of a new link is completed before the timer expires. Optionally, the timer may be carried in a message used to request to perform link reconfiguration, or the timer may have specified default duration.

In some implementations of Solution 1 to Solution 3, the multi-link device may perform link reconfiguration before the timer expires, for example, reconfigure a second link, so that after configuration of the second link is completed, a sensing measurement exchange on the removed first link may be transferred to the newly configured second link, to ensure that sensing continues to be performed.

The following describes a link reconfiguration procedure in detail in Solution 4. All embodiments that are in Solution 1 to Solution 3 and that are related to performing link reconfiguration before the timer expires may be used in combination with embodiments in the following Solution 4. For example, in Solution 1, if the AP MLD determines that the to-be-removed first link is an optional link, a possible selection is to reconfigure the second link before the timer expires. In this case, after announcing that the first link needs to be removed, the AP MLD may perform a method 500 in the following Solution 4. In this implementation, a sensing initiating apparatus in the method 500 is the AP MLD.

### Solution 4

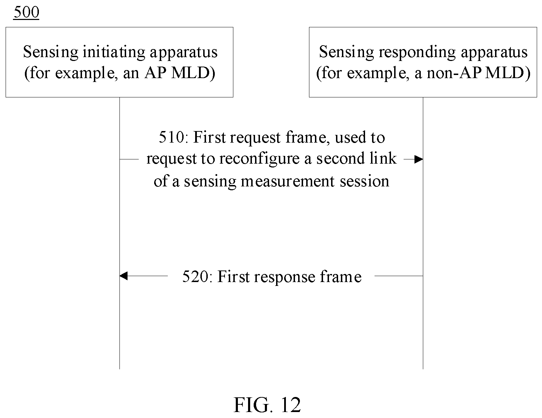

FIG. 12 is a schematic flowchart of another method for sensing measurement according to this application.

510: A sensing initiating apparatus sends a first request frame, where the first request frame is used to request to reconfigure a second link of a sensing measurement session.

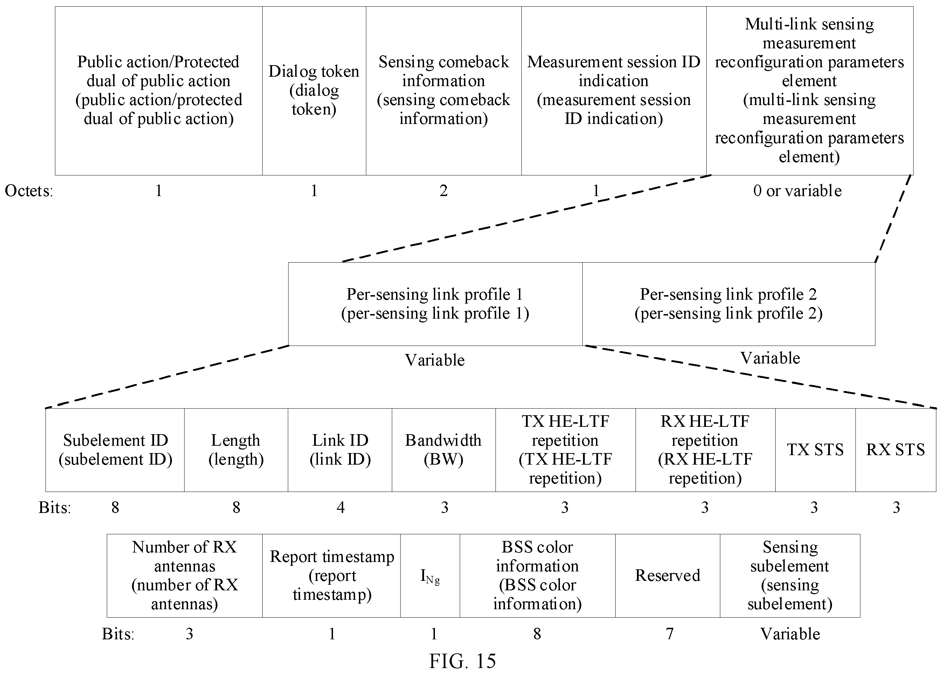

The first request frame carries information about the second link, and the information about the second link includes an identifier of the second link and a sensing measurement parameter of the second link. The sensing measurement parameter of the second link may include one or more of parameters shown in FIG. 15.

In this embodiment of this application, the first request frame used to request to perform link reconfiguration may have a plurality of implementations.

In an implementation, the first request frame may be a multi-link sensing measurement request frame, and the multi-link sensing measurement request frame carries the information about the second link.

### 1. Multi-link sensing measurement request frame.

In an example, the multi-link sensing measurement request frame (multi-link sensing measurement request frame) includes a multi-link sensing measurement parameters element (multi-link sensing measurement parameters element) and a multi-link control (multi-link control) field. The multi-link control field includes a type (type) field, and the type field indicates that the multi-link sensing measurement parameters element is a reconfiguration multi-link sensing measurement parameters element or a basic sensing measurement parameters element. When the multi-link sensing measurement request frame is used to request to configure the second link, the type field indicates that the multi-link sensing measurement parameters element is a reconfiguration multi-link sensing measurement parameters element. The multi-link sensing measurement parameters element carries the information about the second link. Therefore, the multi-link sensing measurement parameters element may be considered as a variant of a multi-link sensing measurement parameters element (which, for example, may be represented as a multi-link sensing measurement parameters element variant). The type field indicates that the variant is a basic multi-link sensing measurement parameters element or a reconfiguration multi-link sensing measurement parameters element, as shown in Table 1.

In an example, an encoding scheme of the type field is shown in Table 1.

**Table 1**

| Type subfield value (type subfield value) | Multi-link sensing measurement parameters element (multi-link sensing measurement parameters element variant) | Variant specific format (variant specific format) |
|---|---|---|
| 0 | Basic (basic) | Basic multi-link sensing measurement parameters element (basic multi-link sensing measurement parameters element) |
| 1 | Reconfiguration (reconfiguration) | Reconfiguration multi-link sensing measurement parameters element (reconfiguration multi-link sensing measurement parameters element) |
| 2 to 7 | Reserved (reserved) | |

It should be understood that values of the type field in Table 1 are merely examples, and a person skilled in the art may alternatively indicate, in another manner, that the multi-link sensing measurement parameters element is a basic multi-link sensing measurement parameters element or a reconfiguration multi-link sensing measurement parameters element.

It should be noted that the basic multi-link sensing measurement parameters element means that the multi-link sensing measurement parameters element includes all sensing measurement parameters (or referred to as operational parameters of sensing measurement) required for sensing measurement, that is, includes a device-level parameter and also includes a link-level parameter.

In addition, the multi-link control field further includes a first field, and the first field indicates whether the multi-link sensing measurement request frame includes a link change bitmap (link change bitmap). The link change bitmap is used to determine a to-be-removed first link and the second link that is requested to be reconfigured. For example, the first field may be a presence bitmap (presence bitmap) field. In an example, the link change bitmap (link change bitmap) field indicates IDs of changed links, for example, an ID of a to-be-removed link and an ID of a link that is requested to be reconfigured. The link change bitmap field is present only when the multi-link sensing measurement request frame carries the reconfiguration multi-link sensing measurement parameters element (reconfiguration multi-link sensing measurement parameters element).

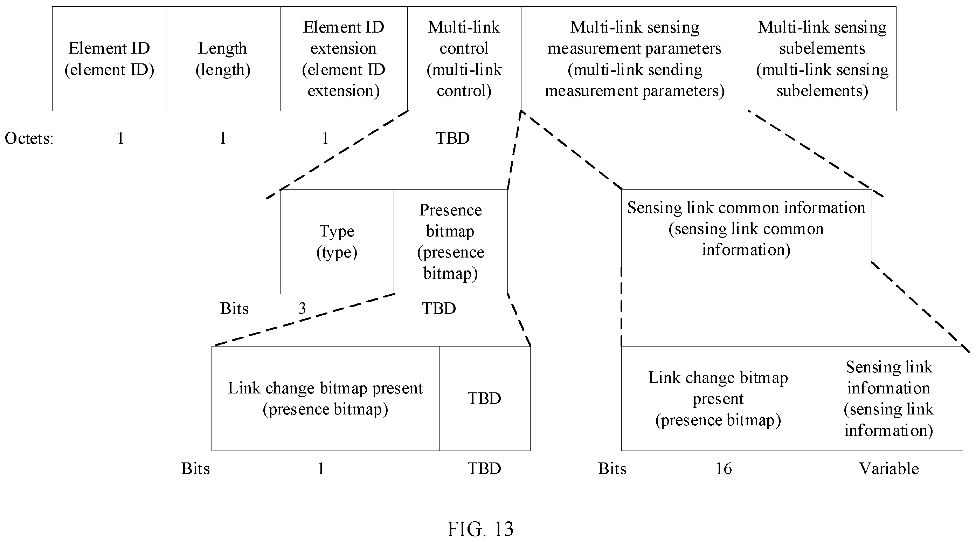

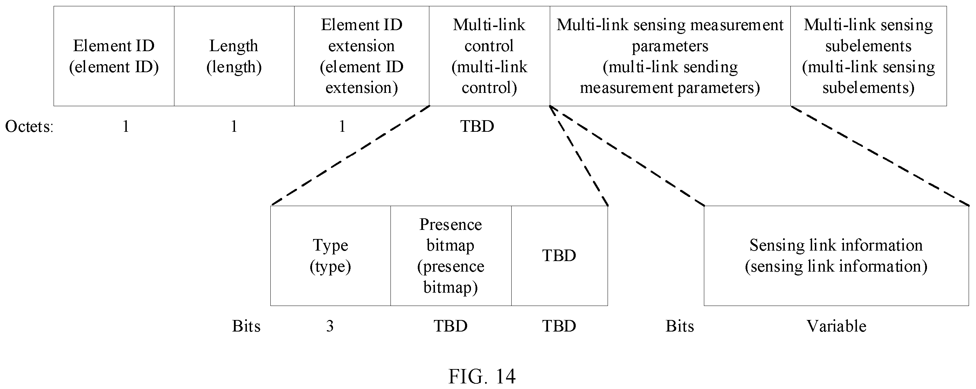

In an implementation, the link change bitmap field may be included in the reconfiguration multi-link sensing measurement parameters element, and the multi-link control field includes the presence bitmap field, where the presence bitmap field indicates whether the link change bitmap is present, as shown in FIG. 13. In another implementation, the reconfiguration multi-link sensing measurement parameters element carries the information about the second link, for example, in a sensing link information field shown in FIG. 14. In addition, the multi-link control field includes the type field and the presence bitmap field. In addition, in FIG. 13, the reconfiguration multi-link sensing parameters element may specifically carry link-level (link-level) information that is of the second link and that is based on different sensing measurement types, and optionally, may further carry device-level (device-level) information that is based on different sensing measurement types. This is not limited. In an example, the link-level information may include one or more of parameters included in "per-sensing link profile" shown in FIG. 15. Optionally, "per-sensing link profile" in FIG. 15 may alternatively be replaced with "per-link profile (per-link profile)" or "per-station profile (per-STA profile)". This is not limited.

In the two frame format designs shown in FIG. 13 and FIG. 14, the multi-link sensing measurement request frame further includes multi-link sensing subelements, and the multi-link sensing subelements carry link-level sensing measurement parameters that are of the second link and that are based on different sensing measurement types. Optionally, the multi-link sensing subelements may further carry multi-link device-level information that is based on different sensing measurement types. Carrying only the link-level information can reduce overheads. In addition, compared with establishing a new sensing measurement session after a link is removed in a conventional technology, carrying the link-level information and the MLD-level information can also reduce overheads. The sensing measurement types may include a TB sensing measurement type, a non-TB sensing measurement type, a sensing by proxy (sensing by proxy, SBP) type, and the like.

In another implementation, this application provides a newly designed request frame used for link reconfiguration and a response frame of the request frame, which are referred to as a multi-link sensing measurement reconfiguration request frame (multi-link sensing measurement reconfiguration request frame) and a multi-link sensing measurement reconfiguration response frame (multi-link sensing measurement reconfiguration response frame) respectively in embodiments of this application.

### 2. Multi-link sensing measurement reconfiguration request frame and multi-link sensing measurement reconfiguration response frame.

In an example, a frame format of the multi-link sensing measurement reconfiguration request frame is shown in FIG. 15. As shown in FIG. 15, the multi-link sensing measurement reconfiguration request frame includes a sensing measurement session ID indication field indicating the sensing measurement session corresponding to the second link that is requested to be reconfigured. In addition, the multi-link sensing measurement reconfiguration request frame further includes a multi-link sensing measurement reconfiguration parameters element (multi-link sensing measurement reconfiguration parameters element). The multi-link sensing measurement reconfiguration parameters element carries a link profile of the second link. In addition, in FIG. 15, the multi-link sensing measurement reconfiguration parameters element may carry link-level information that is of the second link and that is based on different sensing measurement types, and optionally, may further carry device-level information that is based on different sensing measurement types. This is not limited. In an example, the link profile includes a sensing subelement. In another example, the sensing subelement may be directly carried in the multi-link sensing measurement reconfiguration parameters element. The sensing subelement may include link-level (link-level) parameters that are based on different sensing measurement types, or the sensing subelement includes link-level (link-level) parameters and MLD-level (MLD-level) parameters that are based on different sensing measurement types. This is not limited. For example, the link-level parameter included in the sensing subelement may include one or more parameters shown in FIG. 15. This is not limited.

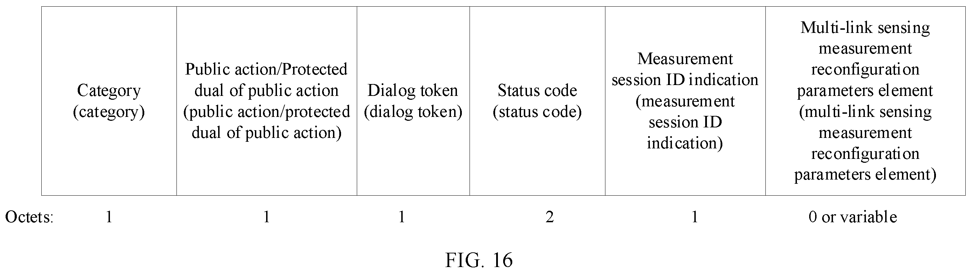

In an example, a frame format of the multi-link sensing measurement reconfiguration response frame is shown in FIG. 16. As shown in FIG. 16, the multi-link sensing measurement reconfiguration response frame carries a measurement session ID indication field and a multi-link sensing measurement reconfiguration parameters element.

520: The sensing initiating apparatus receives a response frame of the first request frame.

The response frame of the first request frame is referred to as a first response frame below. The first response frame includes a status code field. Based on whether the sensing response frame accepts a sensing measurement setup parameter requested in the first request frame, the status code field may include the following possibilities:

The status code field indicates acceptance of the multi-link sensing measurement reconfiguration parameters element requested in the first request frame; or
status code indicates partial acceptance of the multi-link sensing measurement reconfiguration parameters element requested in the first request frame, and the first response frame carries identification information of a link accepted by a sensing responder; or
status code indicates partial rejection of the multi-link sensing measurement reconfiguration parameters element requested in the first request frame, and the first response frame carries a sensing measurement setup parameter recommended by a sensing responder; or
status code indicates rejection of the multi-link sensing measurement reconfiguration parameters element requested in the first request frame, and the first response frame does not carry a suggested sensing measurement setup parameter.

When the status code field indicates the foregoing first two possibilities, sensing measurement setup is completed, and configuration of the sensing measurement parameter (or the operational parameter of sensing measurement) of the second link is completed.

Optionally, if the first request frame is the foregoing improved multi-link sensing measurement request frame, the status code field is carried in a corresponding multi-link sensing measurement response frame. If the first request frame is the newly designed multi-link sensing measurement reconfiguration request frame in FIG. 15, the first response frame is the multi-link sensing measurement reconfiguration response frame, and the status code field may be carried in the multi-link sensing measurement reconfiguration parameters element of the multi-link sensing measurement reconfiguration response frame, or may be carried in another location. This is not limited.

In embodiments related to link reconfiguration in the foregoing solutions, a procedure of reconfiguring a new link needs to be completed before the timer expires.

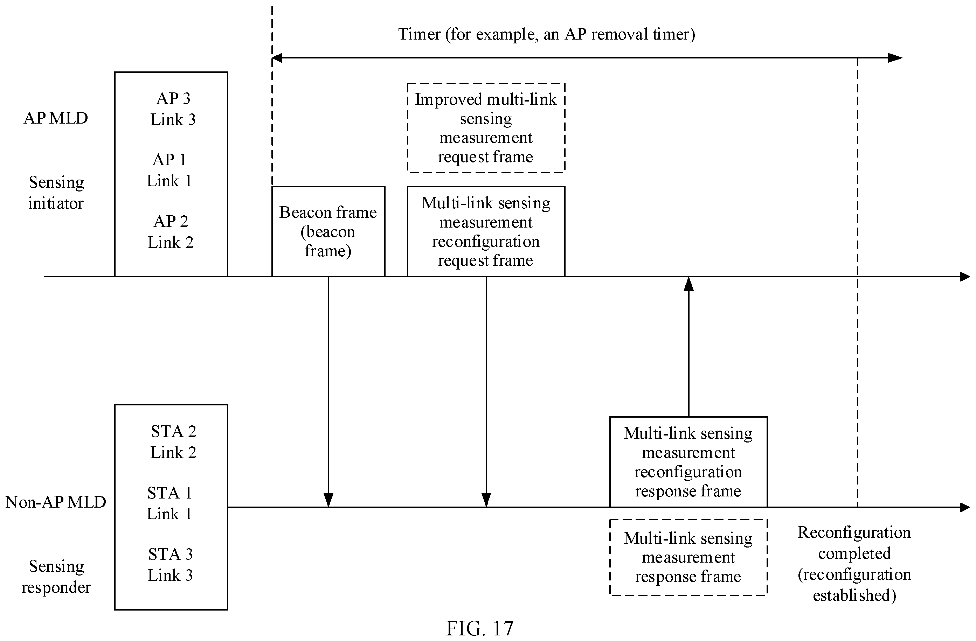

FIG. 17 is a schematic interaction flowchart of a link reconfiguration procedure initiated by a sensing initiator. For example, an AP MLD is a sensing initiator, and a non-AP MLD is a sensing responder. After announcing, in a beacon frame, that a first link needs to be removed, the AP MLD sends a multi-link sensing measurement reconfiguration request frame. The beacon frame carries a timer. In an example, the timer may be an AP removal timer (for example, an AP removal timer). The non-AP MLD responds with a multi-link sensing measurement reconfiguration response frame to the AP MLD. A procedure of reconfiguring a second link needs to be completed before the AP removal timer expires.

It should be understood that, in FIG. 17, the newly designed multi-link sensing measurement reconfiguration request frame and the newly designed multi-link sensing measurement reconfiguration response frame are used as an example. Clearly, configuration of the second link may alternatively be performed by using the foregoing multi-link sensing measurement request frame and the multi-link sensing measurement response frame corresponding to the multi-link sensing measurement request frame, namely, frames shown in dashed boxes in FIG. 17. In this case, the AP MLD and the non-AP MLD have similar exchange behaviors, and details are not described again.

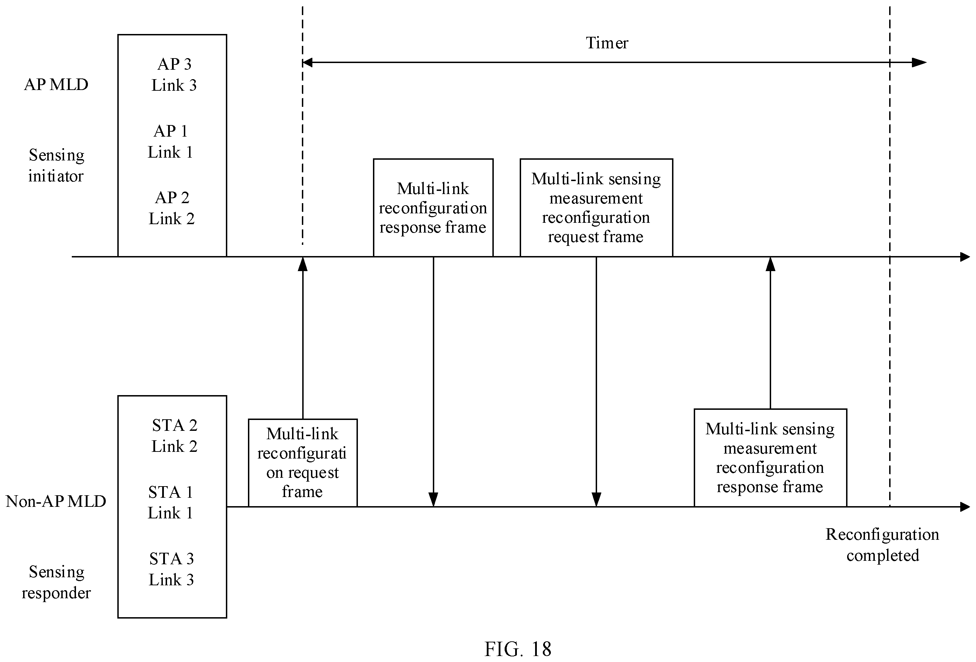

In FIG. 17, for example, the AP MLD is a sensing initiator, the non-AP MLD is a sensing responder, and the AP MLD initiates a link reconfiguration request. In other words, the sensing initiator initiates the link reconfiguration request. The following provides, with reference to FIG. 18, an example in which the non-AP MLD initiates a link reconfiguration request as a sensing responder.

FIG. 18 is an interaction diagram of a link reconfiguration procedure in which a sensing responder requests to perform link reconfiguration.

For example, a non-AP MLD sends a link reconfiguration request frame (link reconfiguration request frame), and may carry fields such as a timer, an identifier (link ID) of a to-be-removed first link, and an ID of a recommended link (which is, for example, represented as a reconfiguration link ID) in the link reconfiguration request frame. The link reconfiguration request frame is used to: notify an AP MLD that the first link is to be closed after the timer expires, and request to perform link reconfiguration. The AP MLD responds with a link reconfiguration response frame (link reconfiguration response frame) to the non-AP MLD based on the link reconfiguration request frame. Optionally, in another implementation, the link reconfiguration request frame may not include the timer, and duration of the timer may be set to a default value, for example, 20 ms. The link reconfiguration response frame indicates whether the AP MLD accepts a link reconfiguration request. If the AP MLD accepts the request, the AP MLD initiates link reconfiguration (link reconfiguration). For a procedure of initiating link reconfiguration by the AP MLD, refer to corresponding descriptions in FIG. 17, and details are not described again.

The link reconfiguration request frame in this embodiment is an example of a second request frame in this application, and the link reconfiguration response frame is an example of a second response frame.

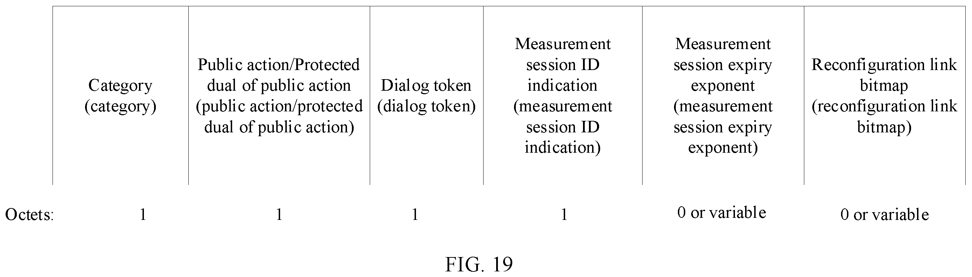

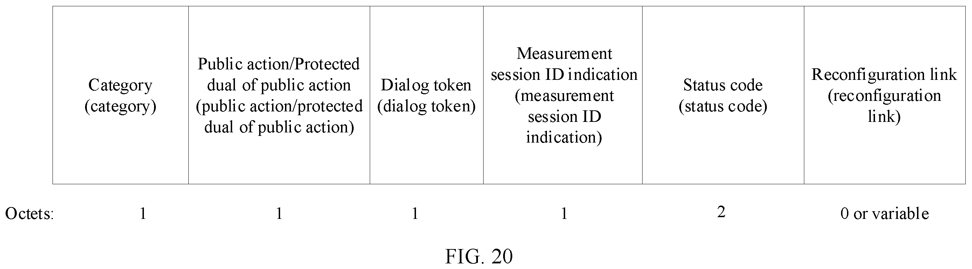

In addition, this application further provides frame format designs of the link reconfiguration request frame and the link reconfiguration response frame. The following provides descriptions with reference to FIG. 19 and FIG. 20.

FIG. 19 is a diagram of a frame format of the link reconfiguration request frame. The link reconfiguration request frame carries a link expiry exponent (link expiry exponent) field indicating an expiration time of the first link or an expiration time for performing link reconfiguration. A link reconfiguration procedure is completed before the expiration time indicated by the link expiry exponent, or at the latest is completed when the expiration time expires. The first link is closed after the expiration time indicated by the link expiry exponent expires. In addition, optionally, the link reconfiguration request frame further carries a reconfiguration link bitmap (reconfiguration link bitmap) field indicating the to-be-removed link and the recommended link. For example, a location of the ID of the to-be-removed link is set to 0, and a location of the ID of the recommended link is set to 1.

FIG. 20 is a diagram of a frame format of the link reconfiguration response frame. As shown in FIG. 20, the link reconfiguration response frame may include a status code field indicating whether the AP MLD agrees to perform link reconfiguration. For example, the status code field of the link reconfiguration response frame may indicate two states: success and request_declined, where success indicates agreeing to perform link reconfiguration, and request_declined indicates declining to perform link reconfiguration. In addition, the link reconfiguration response frame may further include a reconfiguration link (reconfiguration link) field, and the reconfiguration link field indicates a to-be-reconfigured link. In another implementation, the link reconfiguration response frame may alternatively not carry the status code field. In this case, the link reconfiguration response frame indicates a reception acknowledgment (acknowledgment, ACK) of the link reconfiguration request frame or indicates that the link reconfiguration request frame is received. In still another implementation, the interaction procedure shown in FIG. 18 may not be related to the link reconfiguration response frame. That is, after the sensing responder sends the link reconfiguration request frame, the sensing initiator directly sends the multi-link sensing measurement reconfiguration request frame, and then the sensing responder responds with the multi-link sensing measurement reconfiguration response frame to the sensing initiator. When the link reconfiguration procedure does not include the link reconfiguration response frame, the link reconfiguration request frame does not include a dialog token (dialog token) field.

In another implementation, removing the first link and requesting to reconfigure the second link may also be considered as requesting to replace the first link with the second link. In this case, the reconfiguration link field indicates a to-be-replaced link and a reconfigured link. In an example, the reconfiguration link field may be a bitmap, a location of an ID of the to-be-replaced link is set to 0, and a location of an ID of the reconfigured link is set to 1.

In the link reconfiguration procedure, there may be one or more closed links, and there may also be one or more reconfigured links. This is not limited. Particularly, if a number of closed links is equal to a number of reconfigured links, it may be considered that the foregoing link replacement is performed. For example, that a first link is closed and a second link is reconfigured means that the first link is replaced with the second link.

It can be learned from the foregoing descriptions that a TB sensing measurement exchange is initiated by an AP as a sensing initiator, and a non-TB sensing measurement exchange instance is initiated by a non-AP STA as a sensing initiator. The sensing measurement exchange procedures in Solution 1 to Solution 4 are not only applicable to a TB sensing measurement procedure, but also applicable to a non-TB sensing measurement procedure.

Specifically, the procedures of closing the link and terminating the sensing measurement session, the designs of the related frame formats, and the link reconfiguration procedures in Solution 1 to Solution 4 are also applicable to the non-TB sensing measurement procedure. Specifically, the following may be included.
1. For the TB sensing measurement procedure, a link reconfiguration process may occur after an AP MLD announces that a link needs to be removed, or may occur before the announcement, provided that a procedure of removing a first link and reconfiguring a second link is completed before a timer expires. For the non-TB sensing measurement procedure, the link reconfiguration process may occur after a non-AP MLD receives, from the AP MLD, the announcement of closing the first link in a beacon frame. Similarly, a process of reconfiguring the second link needs to be completed before the timer expires.
2. In the link reconfiguration process, in the TB sensing measurement procedure, an element carried in a sensing subelement in a frame format is an element for the TB sensing exchange procedure. However, in the non-TB sensing measurement procedure, an element carried in a sensing subelement is an element for the non-TB sensing exchange procedure, for example, a non-TB sensing specific subelement (non-TB sensing specific subelement).
3. In the link reconfiguration process, in the foregoing TB sensing measurement exchange, if the non-AP STA needs to remove a link and request to perform link reconfiguration, the non-AP STA needs to send a link reconfiguration request frame to the AP MLD. However, in the non-TB sensing measurement exchange, the non-AP STA does not need to send the link reconfiguration request frame, and may directly initiate link reconfiguration. A link reconfiguration procedure is completed before a non-AP is deleted or disabled or an affiliated STA enters a power saving mode.

The foregoing describes in detail a procedure of removing a link in the multi-link scenario and possibly performing link reconfiguration when the link is removed. In the foregoing embodiments, this application provides a concept of the redundant link. In view of this, this application further provides an improved multi-link sensing measurement request frame to add setting of a redundant link in a multi-link sensing measurement setup phase, to improve reliability of a sensing measurement exchange and flexibility of sensing measurement setup. This is described in the following in Solution 5.

### Solution 5

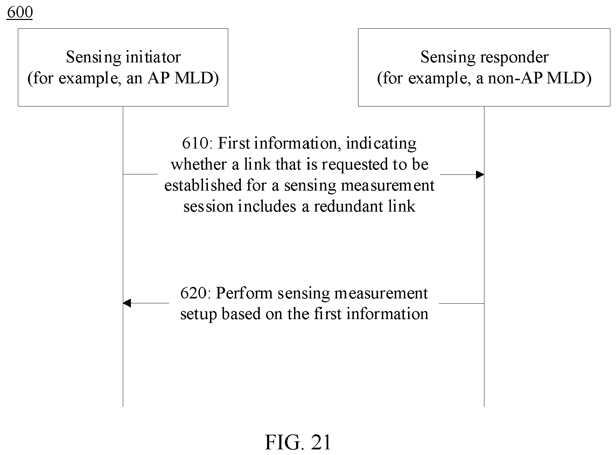

FIG. 21 is a schematic flowchart of a method for sensing measurement according to this application.

610: A sensing initiating apparatus sends first information, where the first information is used to determine whether a link that is requested to be established for a sensing measurement session includes a redundant link, the link that is requested to be established for the sensing measurement session includes at least one of a mandatory link and an optional link, and the redundant link is a backup link of the mandatory link or the optional link.

620: A sensing initiating apparatus performs sensing measurement setup based on the first information.

In an implementation, the first information may be carried in a multi-link sensing measurement request frame.

For example, the multi-link sensing measurement request frame includes a minimum-number-of-links field and a maximum-number-of-links field, the minimum-number-of-links field indicates a requested minimum number of links, and the maximum-number-of-links field indicates a requested maximum number of links. If a value indicated by the minimum number of links is equal to a value indicated by the maximum number of links, it indicates that the link that is requested to be established for the sensing measurement session does not include the redundant link. If a value indicated by the minimum number of links is not equal to a value indicated by the maximum number of links, it indicates that the link that is requested to be established for the sensing measurement session includes the redundant link.

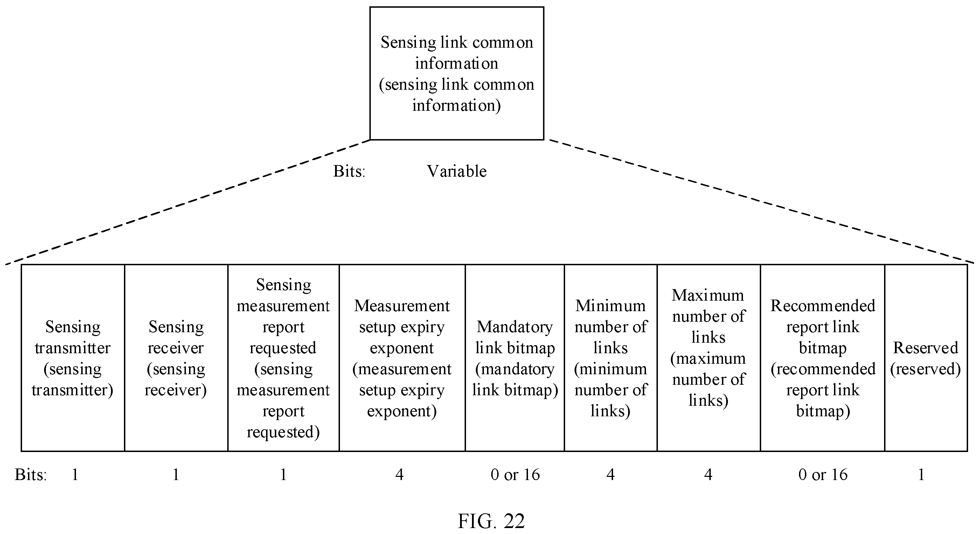

FIG. 22 is an example in which the multi-link sensing measurement request frame carries the first information. As shown in FIG. 22, the minimum-number-of-links field and the maximum-number-of-links field are carried in sensing link common information (sensing link common information) of the multi-link sensing measurement request frame. The sensing link common information indicates common parameter information of links established for sensing measurement. A mandatory link bitmap indicates a link that is essential for sensing measurement, that is, indicates the mandatory link in this embodiment of this application. A requested number of links indicates a number of links required for sensing measurement. A recommended report link bitmap indicates a recommended link for sending a sensing measurement report in a sensing measurement exchange.

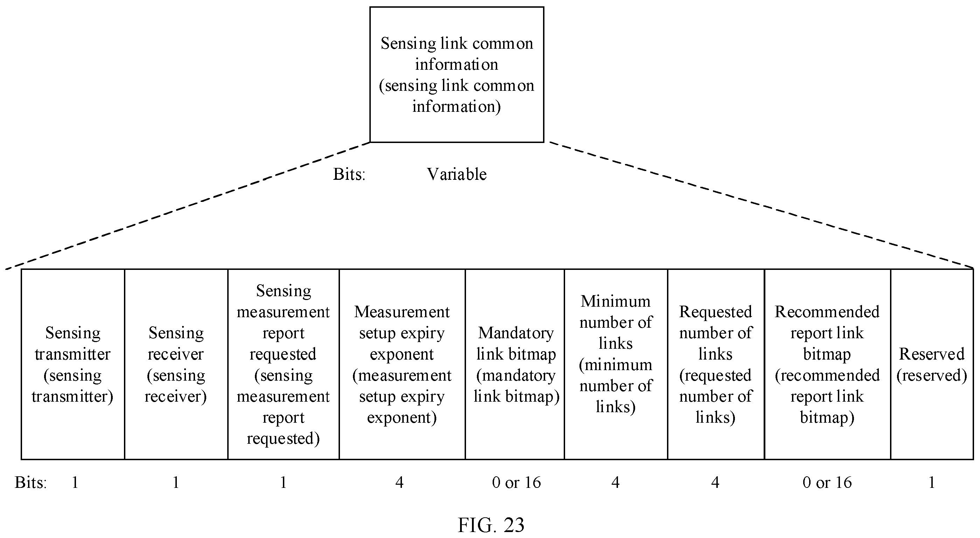

FIG. 23 is another example in which the multi-link sensing measurement request frame carries the first information. As shown in FIG. 23, the minimum-number-of-links field is carried in sensing link common information of the multi-link sensing measurement request frame. In this example, the multi-link sensing measurement request frame carries only the minimum-number-of-links field.

In another implementation, the first information is a newly added field, which is, for example, referred to as a redundancy indication field, in the multi-link sensing measurement request frame. The redundancy indication field indicates whether the optional link in the link that is requested to be established for the sensing measurement session is a redundant link.

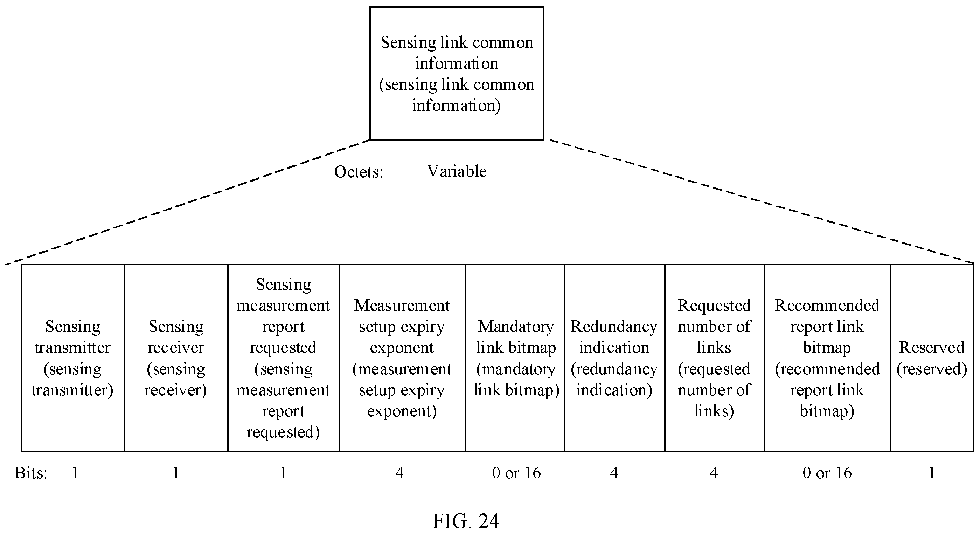

FIG. 24 is still another example in which the multi-link sensing measurement request frame carries the first information. As shown in FIG. 24, a redundancy indication (redundancy indication) field is included in sensing link common information of the multi-link sensing measurement request frame. For example, it is assumed that the link that is requested to be established for the sensing measurement session includes an optional link. In this case, if the redundancy indication field is set to a first value, for example, "1", it indicates that the optional link is a redundant link; or if the redundancy indication field is set to a second value, for example, "0", it indicates that the optional link is not a redundant link. When links that are requested to be established for the sensing measurement session include a plurality of optional links, the redundancy indication field may indicate a link identifier of an optional link that is a redundant link, to indicate the redundant link in the plurality of optional links.

In Solution 5, setting of the redundant link is added in a multi-link sensing measurement setup process, which improves reliability of the sensing measurement exchange. In addition, the minimum-number-of-links field and the maximum-number-of-links field are set, which increases flexibility of sensing measurement setup.

As described above, the names of the frames, the messages, the information, the fields, or the like in embodiments of this application are merely names set for ease of describing the technical solutions of this application and are used as examples. In different communication systems, these names may alternatively be different from the examples in embodiments of this application.

In addition, in some embodiments, in the action field of the frame, a field that is after category (category) and whose length is one octet may be public action, protected dual of public action, or public action/protected dual of public action. If the field is protected dual of public action, it indicates that the frame is a protected frame format.

The sensing measurement procedure shown in FIG. 7 is taken as an example. "Multi-link sensing measurement setup" may also be referred to as a "multi-link sensing measurement session", or may be replaced with "sensing measurement setup", a "sensing measurement session", or the like. That is, a prefix "multi-link" is canceled. The "multi-link sensing measurement exchange" may also be referred to as a "multi-link sensing measurement instance", a "sensing measurement exchange", or a "sensing measurement instance". "Multi-link sensing measurement termination" may also be referred to as "sensing measurement termination".

For another example, in the link reconfiguration procedure, the prefix "multi-link" may alternatively be removed from the names of the multi-link sensing measurement reconfiguration request frame and the multi-link sensing measurement reconfiguration response frame, which are respectively referred to as a "sensing measurement reconfiguration request frame" and a "sensing measurement reconfiguration response frame". The names of the "multi-link sensing measurement request frame" and the "multi-link sensing measurement response frame" may alternatively be replaced with a "sensing measurement request frame" and a "sensing measurement response frame" respectively.

For another example, in embodiments of this application, the "redundant link" may also be referred to as a "backup link", and the "optional link" may also be referred to as a "preferred link". In the frame format design, the "sensing link common information" in FIG. 22 to FIG. 24 may also be referred to as "common information".

In addition, some fields in embodiments of this application are collectively described.

Sensing comeback information: indicates an unassociated device to send a sensing measurement inquiry frame to an AP within a given time to participate in sensing measurement.

Measurement session ID indication: indicates an ID of a session.

Sensing measurement parameters element: means parameters that are set for a sensing measurement exchange, including a sensing measurement parameters field and a sensing subelement.

Sensing measurement parameter: is a field in a sensing measurement parameters element.

Sensing subelement: is a field in a sensing measurement parameters element, and varies with different sensing measurement types. The sensing subelement may be a TB sensing specific subelement, or a non-TB sensing specific subelement, or an SBP specific subelement.

Fields in a sensing measurement parameters field include the following.

Sensing transmitter (sensing transmitter): indicates that a function of the device is sending a sensing PPDU.

Sensing receiver (sensing receiver): indicates that a function of the device is receiving a sensing PPDU.

Sensing measurement report requested (sensing measurement report requested): indicates whether a device sends a sensing measurement report.

Measurement setup expiry exponent (measurement setup expiry exponent): indicates time of a timer for terminating a session.

Bandwidth (bandwidth, BW): indicates bandwidth used by a device.

Transmitter high efficiency-long training field repetition (TX HE-LTF Repetition): indicates a number of HE-LTF repetitions used by a device to send an NDP.

Receiver high efficiency-long training field repetition (RX HE-LTF Repetition): indicates a number of HE-LTF repetitions used by a device to receive an NDP.

Transmitter space-time stream (TX STS): indicates a number of streams used by a device to transmit an NDP within specified bandwidth.

Receiver space-time stream (RX STS): indicates a number of streams used by a device to receive an NDP within specified bandwidth.

Number of receiver antennas (Number of RX antennas): indicates a number of antennas used by a receiver.

Report timestamp (Report timestamp): indicates whether a report timestamp exists in a sensing measurement report frame.

Subcarrier grouping (*I_{N_{g}}* ): indicates a subcarrier grouping situation in a sensing measurement report.

Basic service set color information (BSS Color Information): indicates a basic service set color.

In addition, some embodiments are related to a link-related bitmap (bitmap), and the bitmap may indicate a link ID. For example, when an i^{th} bit in the bitmap (bitmap) is set to 1, the i^{th} bit indicates a link whose link ID is (i-1), where i is an integer. The link-related bitmap may indicate a link list or a link ID. This is not limited.

The foregoing describes in detail the method for sensing measurement provided in this application, and describes a communication apparatus provided in this application.

To implement functions of the communication apparatus (for example, the AP MLD or the non-AP MLD) in embodiments of this application, the communication apparatus may implement the corresponding functions in a form of hardware structure, software module, or combination of a hardware structure and a software module.

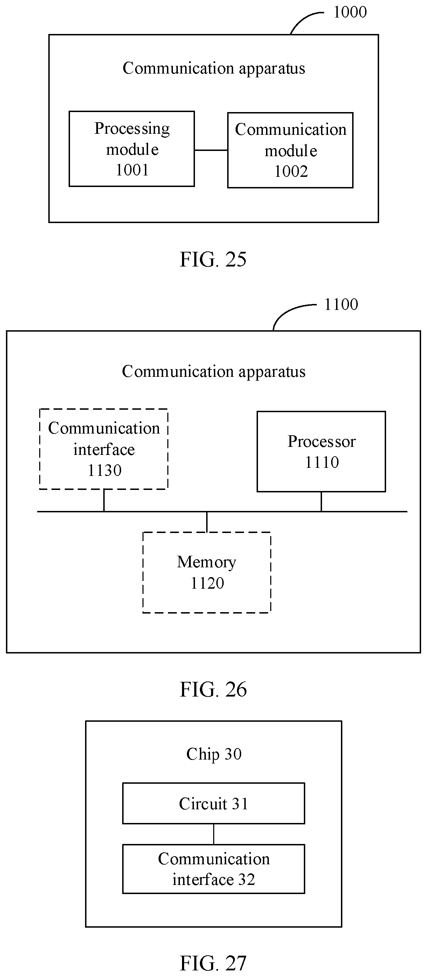

FIG. 25 is a diagram of a structure of a communication apparatus according to this application.

As shown in FIG. 25, the communication apparatus 1000 includes a processing module 1001 and a communication module 1002. The communication apparatus 1000 may be a communication device, or may be an apparatus, for example, a chip, a chip system, or a circuit, that is used in a communication device and that can implement corresponding functions of the communication device. For example, the communication device may include a sensing initiator (for example, an AP MLD or a non-AP MLD), a sensing responder (for example, a non-AP MLD or an AP MLD), or the like.

The communication module may be a transceiver module, a transceiver, a transceiver device, a transceiver apparatus, or the like. The processing module may also be referred to as a processor, a processing board, a processing unit, a processing apparatus, or the like. Optionally, the communication module is configured to perform a sending operation and a receiving operation of the sensing initiator or the sensing responder in any method embodiment. A component that is in the communication module and that is configured to implement a receiving function may be considered as a receiving unit, and a component that is in the communication module and that is configured to implement a sending function may be considered as a sending unit. In other words, the communication module includes the receiving unit and the sending unit. The processing module is configured to perform an operation/processing related to internal implementation of the sensing initiator or the sensing responder in any method embodiment. It should be understood that for a corresponding specific operation of each module, refer to the descriptions in the method embodiments. Details are not described again.

In addition, it should be noted that the communication module and/or the processing module may be implemented through a virtual module. For example, the processing module may be implemented through a software functional unit or a virtual apparatus, and the communication module may be implemented through a software function or a virtual apparatus. Alternatively, the processing module or the communication module may be implemented through an entity apparatus. For example, if the apparatus is implemented through a chip/hardware circuit, the communication module may be an input/output circuit and/or a communication interface, and perform an input operation (corresponding to the foregoing receiving operation) and an output operation (corresponding to the foregoing sending operation). The processing module is an integrated circuit, a logic circuit, or the like.

Division into the modules in this application is an example, is merely division into logical functions, and may be other division during actual implementation. In addition, functional modules in examples of this application may be integrated into one module, or each of the modules may exist alone physically, or two or more modules may be integrated into one module. The foregoing integrated module may be implemented in a form of hardware, or may be implemented in a form of software functional module, or may be implemented in a form of functional module combining hardware and software. This is not limited.

Refer to FIG. 26. This application further provides a diagram of a structure of another communication apparatus.

The communication apparatus 1100 may be configured to implement functions of any network element (for example, the AP MLD or the non-AP MLD) in the communication system described in the foregoing example. The communication apparatus 1100 may include at least one processor 1110. Optionally, the processor 1110 (or a processing apparatus) is coupled to a memory. The memory may be located in the communication apparatus, the memory may be integrated with the processor, or the memory may be located outside the communication apparatus. For example, the communication apparatus 1100 may further include at least one memory 1120. The memory 1120 stores a computer program, instructions, and/or data that are/is necessary for implementing any one of the foregoing embodiments. The processor 1110 may execute the computer program, the instructions, and/or the data that are/is stored in the memory 1120, to complete corresponding functions of the AP MLD or the non-AP MLD in any one of the foregoing embodiments.

The communication apparatus 1100 may further include a communication interface 1130, and the communication apparatus 1100 may exchange information with another device through the communication interface 1130. For example, the communication interface 1130 may be a transceiver, a circuit, a bus, a module, a pin, or a communication interface of another type. When the communication apparatus 1100 is a chip-type apparatus or a circuit, the communication interface 1130 in the apparatus 1100 may alternatively be an input/output circuit, and may input information (or referred to as receiving information) and/or output information (or referred to as sending information). The processor may be an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 1110 may operate cooperatively with the memory 1120 and the communication interface 1130. A connection medium between the processor 1110, the memory 1120, and the communication interface 1130 is not limited in this application.

As shown in FIG. 27, this application further provides a chip. The chip 30 includes a circuit 31 and a communication interface 32 or an input/output interface 32. The circuit 31 may be a logic circuit, an integrated circuit, or the like. The communication interface 32 may alternatively be an input/output circuit, an input/output interface, an interface circuit, or the like, and may input information (or referred to as receiving information) or output information (or referred to as sending information). The chip 30 may perform the method performed by the sensing initiating apparatus or the sensing responding apparatus in embodiments of this application.

In addition, this application further provides a computer-readable storage medium. The computer-readable storage medium stores computer instructions. When the computer instructions are run on a computer, the operations and/or processing performed by the sensing initiator or the sensing responder in the method embodiments of this application are performed.

This application further provides a computer program product. The computer program product includes computer program code or instructions. When the computer program code or the instructions are run on a computer, the operations and/or processing performed by the sensing initiator or the sensing responder in the method embodiments of this application are performed.

In addition, this application further provides a chip. The chip includes a processor. A memory configured to store a computer program is disposed independently of the chip. The processor is configured to execute the computer program stored in the memory, so that the operations and/or processing performed by the sensing initiator or the sensing responder in any method embodiment are/is performed.

Further, the chip may include a communication interface. The communication interface may be an input/output interface, an interface circuit, or the like. Further, the chip may include the memory.

This application provides a communication system, including the sensing initiator and the sensing responder in the foregoing method embodiments.

In this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams that are disclosed in this application. The general-purpose processor may be a microprocessor or any conventional processor or the like. The steps of the methods disclosed with reference to this application may be directly implemented by a hardware processor, or may be implemented by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory is any other medium that can carry or store expected program code in a form of instruction or data structure and that can be accessed by a computer, but is not limited thereto. Alternatively, the memory in this application may be a circuit or any other apparatus that can implement a storage function, and is configured to store program instructions and/or data.

In addition, this application provides a communication apparatus, including at least one processor. The at least one processor is coupled to at least one memory, and the at least one processor is configured to execute a computer program or instructions stored in the at least one memory, so that the communication apparatus has functions of the foregoing AP MLD or non-AP MLD.

This application further provides a chip, including a processor and a communication interface. The communication interface is configured to: receive to-be-processed information and/or data, and send the to-be-processed information and/or data to the processor. The processor is configured to process the to-be-processed information and/or data, so that a communication apparatus in which the chip is mounted has functions of the AP MLD or the non-AP MLD in any one of the foregoing embodiments.

This application further provides a computer-readable storage medium. The computer-readable storage medium stores computer instructions. When the computer instructions are run on a computer, functions of the AP MLD or the non-AP MLD in any one of the foregoing embodiments are implemented.

This application further provides a computer program product. The computer program product includes computer program code. When the computer program code is run on a computer, functions of the AP MLD or the non-AP MLD in any one of the foregoing embodiments are implemented.

This application further provides a wireless communication system, including one or more network elements in any one of the foregoing embodiments. For example, the communication system includes at least one AP MLD and at least one non-AP MLD.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. In an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of software functional unit and sold or used as an independent product, the functions may be stored in a computer-readable storage medium. Based on such an understanding, the technical solutions of this application essentially, or the part contributing to a conventional technology, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for sensing measurement, comprising:
determining a link type of a first link, wherein the first link is a to-be-removed link in a plurality of links of a sensing measurement session, and the link type comprises a mandatory link, an optional link, or a redundant link; and
removing the first link based on the link type of the first link.

2. The method according to claim 1, wherein removing the first link based on the link type of the first link comprises:
if the first link is the mandatory link or the optional link, removing the first link after a timer expires; and
the method further comprises:
terminating the sensing measurement session.

3. The method according to claim 1, wherein removing the first link based on the link type of the first link comprises:
if the first link is the optional link, removing the first link after a timer expires; and
the method further comprises:
performing link reconfiguration before the timer expires.

4. The method according to claim 1, wherein removing the first link based on the link type of the first link comprises:
if the first link is the redundant link, removing the first link after a timer expires.

5. The method according to claim 3, wherein performing link reconfiguration before the timer expires comprises:
sending a first request frame, wherein the first request frame indicates a request for reconfiguration of a second link of the sensing measurement session, the first request frame carries information about the second link, and the information about the second link comprises an identifier of the second link and a sensing measurement parameter of the second link.

6. The method according to claim 5, wherein the first request frame comprises a multi-link control field and a multi-link sensing measurement parameters element, the multi-link control field carries a type field, the type field indicates that the multi-link sensing measurement parameters element is a reconfiguration multi-link sensing measurement parameters element, and the multi-link sensing measurement parameters element carries the information about the second link.

7. The method according to claim 6, wherein the multi-link control field further comprises a first field, the first field indicates whether the first request frame comprises a link change bitmap, and the link change bitmap is used to determine the to-be-removed first link and the second link that is requested to be reconfigured; and
when the first field indicates that the first request frame comprises the link change bitmap, the multi-link sensing measurement parameters element further comprises a link change bitmap field.

8. The method according to claim 6 or 7, wherein the multi-link sensing measurement parameters element further carries a multi-link sensing subelement field, and the multi-link sensing subelement field carries link-level sensing measurement parameters that are of the second link and that are based on different sensing measurement types.

9. The method according to claim 5, wherein the first request frame further carries an identifier of the sensing measurement session; and
the first request frame carries a multi-link sensing measurement reconfiguration parameters element, and the multi-link sensing measurement reconfiguration parameters element carries the information about the second link that is requested to be reconfigured.

10. The method according to claim 9, wherein that the multi-link sensing measurement reconfiguration parameters element carries the information about the second link that is requested to be reconfigured comprises:
the multi-link sensing measurement reconfiguration parameters element comprises a link profile of the second link, wherein the link profile comprises the identifier of the second link and the sensing measurement parameter of the second link, the link profile further comprises a sensing subelement, and the sensing subelement carries link-level sensing measurement parameters that are of the second link and that are based on different sensing measurement types.

11. The method according to claim 9 or 10, wherein the method further comprises:
receiving a first response frame of the first request frame, wherein the first response frame comprises a status code field, and the status code field indicates acceptance of the multi-link sensing measurement reconfiguration parameters element requested in the first request frame; or
the status code indicates partial acceptance of the multi-link sensing measurement reconfiguration parameters element requested in the first request frame, and the first response frame further carries identification information of an accepted link; or
the status code indicates rejection of the multi-link measurement reconfiguration parameters element requested in the first request frame, and the first response frame further carries a recommended sensing measurement setup parameter; or
the status code indicates rejection of the sensing measurement reconfiguration parameters element requested in the first request frame, and the multi-link sensing measurement reconfiguration parameters element does not carry a suggested sensing measurement setup parameter.

12. The method according to any one of claims 5 to 11, wherein before sending the first request frame, the method further comprises:
receiving a second request frame, wherein the second request frame indicates a request for link reconfiguration performed for the sensing measurement session.

13. The method according to claim 12, wherein the method further comprises:
sending a second response frame, wherein the second response frame indicates an acknowledgment of reception of the second request frame.

14. The method according to claim 12 or 13, wherein the second request frame carries a link expiry exponent, and the link expiry exponent indicates duration of the timer for performing the link reconfiguration.

15. The method according to any one of claims 12 to 14, wherein the second request frame further carries a reconfiguration link bitmap field, and the reconfiguration link bitmap field indicates an identifier of the to-be-removed first link and the identifier of the second link that is requested to be reconfigured.

16. The method according to any one of claims 1 to 15, wherein the method is applied to trigger-based sensing measurement or non-trigger-based sensing measurement.

17. A method for sensing measurement, comprising:
determining to remove a first link, wherein the first link is any one of a plurality of links of a sensing measurement session; and
removing the first link after a timer expires, and terminating the sensing measurement session.

18. The method according to claim 17, wherein determining to remove the first link comprises:
when it is determined that the first link needs to enter a power saving mode, determining to remove the first link.

19. A method for sensing measurement, comprising:
determining a link type of a first link, wherein the first link is a to-be-removed link in a plurality of links of a sensing measurement session, and the link type comprises a mandatory link, an optional link, or a redundant link; and
removing the first link based on the link type of the first link and link request information used during establishment of the sensing measurement session, wherein the link request information indicates a requested minimum number of links.

20. The method according to claim 19, wherein removing the first link based on the link type of the first link and the link request information used during establishment of the sensing measurement session comprises:
if a number of the plurality of links is equal to the minimum number of links, and the first link is a mandatory link or an optional link, removing the first link after a timer expires; and
the method further comprises:
terminating the sensing measurement session.

21. The method according to claim 19, wherein removing the first link based on the link type of the first link and the link request information used during establishment of the sensing measurement session comprises:
if a number of the plurality of links is equal to the minimum number of links, and the first link is an optional link, removing the first link after a timer expires; and
the method further comprises:
performing link reconfiguration before the timer expires.

22. The method according to claim 19, wherein removing the first link based on the link type of the first link and the link request information used during establishment of the sensing measurement session comprises:
if a number of the plurality of links is greater than the minimum number of links, and the first link is a mandatory link or an optional link, removing the first link after a timer expires; and
the method further comprises:
terminating the sensing measurement session.

23. The method according to claim 19, wherein removing the first link based on the link type of the first link and the link request information used during establishment of the sensing measurement session comprises:
if a number of the plurality of links is greater than the minimum number of links, and the first link is an optional link, removing the first link after a timer expires; and
the method further comprises:
performing link reconfiguration before the timer expires.

24. The method according to claim 19, wherein removing the first link based on the link type of the first link and the link request information used during establishment of the sensing measurement session comprises:
if a number of the plurality of links is greater than the minimum number of links, and the first link is a redundant link, implicitly removing the first link after a timer expires.

25. A method for sensing measurement, comprising:
sending first information, wherein the first information is used to determine whether a link that is requested to be established for a sensing measurement session comprises a redundant link, and the link that is requested to be established for the sensing measurement session comprises at least one of a mandatory link or an optional link; and
performing sensing measurement setup based on the first information.

26. The method according to claim 25, wherein sending the first information comprises:
sending a multi-link sensing measurement request frame, wherein the multi-link sensing measurement request frame carries the first information.

27. The method according to claim 25 or 26, wherein the first information comprises a minimum-number-of-links field and a maximum-number-of-links field, the minimum-number-of-links field indicates a requested minimum number of links, and the maximum-number-of-links field indicates a requested maximum number of links; and
if a value indicated by the minimum number of links is equal to a value indicated by the maximum number of links, the link that is requested to be established for the sensing measurement session does not comprise the redundant link; or
if a value indicated by the minimum number of links is not equal to a value indicated by the maximum number of links, the link that is requested to be established for the sensing measurement session comprises the redundant link.

28. The method according to any one of claims 25 to 27, wherein the first information comprises a redundancy indication field, and the redundancy indication field indicates whether the optional link in the link that is requested to be established for the sensing measurement session is a redundant link.

29. A method for sensing measurement, comprising:
sending a first request frame, wherein the first request frame is used to request reconfiguration of a second link of a sensing measurement session, the first request frame carries information about the second link, and the information about the second link comprises an identifier of the second link and a sensing measurement parameter of the second link; and
receiving a first response frame of the first request frame.

30. The method according to claim 29, wherein the first request frame comprises a multi-link control field and a multi-link sensing measurement parameters element, the multi-link control field comprises a type field, the type field indicates that the multi-link sensing measurement parameters element is a reconfiguration multi-link sensing measurement parameters element, and the multi-link sensing measurement parameters element carries information about the second link.

31. The method according to claim 29 or 30, wherein the multi-link control field further comprises a first field, the first field is used to determine whether the first request frame comprises a link change bitmap, and the link change bitmap is used to determine the to-be-removed first link and the second link that is requested to be reconfigured; and when the first field indicates that the first request frame comprises the link change bitmap, the multi-link sensing measurement parameters element further comprises a link change bitmap field.

32. The method according to any one of claims 29 to 31, wherein the multi-link sensing measurement parameters element further carries a multi-link sensing subelement field, and the multi-link sensing subelement field carries link-level sensing measurement parameters that are of the second link and that are obtained based on different sensing measurement types.

33. A communication apparatus, comprising a module or a unit configured to perform the method according to any one of claims 1 to 32.

34. A communication apparatus, comprising a processor, wherein the processor is coupled to a memory, and the processor is configured to execute a computer program or instructions stored in the memory, to enable the communication apparatus to perform the method according to any one of claims 1 to 16, or perform the method according to claim 17 or 18, or perform the method according to any one of claims 19 to 24, or perform the method according to any one of claims 25 to 28, or perform the method according to any one of claims 29 to 32.

35. A chip, comprising a circuit and a communication interface, wherein the communication interface is configured to: receive to-be-processed information and/or data, and send the to-be-processed information and/or data to the circuit, and the circuit is configured to process the to-be-processed information and/or data, to enable a communication apparatus in which the chip is mounted to perform the method according to any one of claims 1 to 16, or perform the method according to claim 17 or 18, or perform the method according to any one of claims 19 to 24, or perform the method according to any one of claims 25 to 28, or perform the method according to any one of claims 29 to 32.

36. A computer-readable storage medium, wherein the computer-readable storage medium stores computer instructions; and when the computer instructions are run on a computer, the method according to any one of claims 1 to 16 is implemented, or the method according to claim 17 or 18 is implemented, or the method according to any one of claims 19 to 24 is implemented, or the method according to any one of claims 25 to 28 is implemented, or the method according to any one of claims 29 to 32 is implemented.

37. A wireless communication system, comprising the communication apparatus according to claim 33 or claim 34.
